# EUROPÄISCHE PATENTSCHRIFT

(11) **EP 2 962 922 B1**
(45) Veröffentlichungstag und Bekanntmachung des Hinweises auf die Patenterteilung: **30.10.2019**
(21) Anmeldenummer: 15174538.7
(22) Anmeldetag: 30.06.2015
(51) Int. Cl.: B62J 9/00, B62J 11/00

(54) **Befestigungssystem**
Fixing system
Système de fixation

(30) Priorität: 04.07.2014 DE 102014009987; 21.08.2014 DE 102014012421
(43) Veröffentlichungstag der Anmeldung: 06.01.2016
(73) Patentinhaber: Invented Here B.V., 7071 AA Ulft (NL)
(72) Erfinder: van Balveren, Marthijn Marinus Gerardus Henrikus, 7071 AA Ulft (NL); de Boer, Wouter, 7071 AA Ulft (NL); de Wit, Sander Leon, 7071 AA Ulft (NL); Adema, Libbe Homme, 7071 AA Ulft (NL)
(74) Vertreter: V.O.

(56) Entgegenhaltungen:
- EP-A1- 2 735 498
- DE-U1- 20 300 747
- DE-U1- 29 522 330
- DE-U1- 29 712 624
- TW-A- 201 018 611
- TW-A- 201 233 579
- TW-U- M 460 039
- US-A- 5 282 554
- US-A1- 2011 266 321

## Beschreibung

Die vorliegende Erfindung betrifft ein Befestigungssystem zum Befestigen von Behältern wie Taschen oder Körben an einem Lenker eines Fahrrades.

Solche Befestigungssysteme sind aus dem Stand der Technik bekannt, zum Beispiel aus der Gebrauchsmusterschrift DE 295 22 330 U1, in der eine Halterung zum lösbaren Anbringen eines Behältnisses an einem Fahrrad gezeigt wird. Sie dienen der Festlegung von unterschiedlichen Gegenständen, wie beispielsweise Taschen, Körben, Lasttableaus, Lastträgern oder ähnlichen Elementen, die im Folgenden als Behälter bezeichnet sind. Unter Fahrrad wird im Umfang der Erfindung jedes Rad verstanden, das eine fahrende Fortbewegung eines Benutzers erlaubt, sei es mit manuellem oder maschinellem Antrieb.

Bei den aus dem Stand der Technik bekannten Befestigungssystemen zum Befestigen von obigen Behältern am Lenker eines Fahrrades ist es problematisch, dass die Systeme nur mit großem Aufwand an unterschiedliche Lenkerdurchmesser angepasst werden können. Auch die Form des Lenkers bzw. die Dimension eines daran befestigten Vorbaus zur Montage des Lenkers am Fahrrad selbst bringt hinsichtlich der Befestigung von obigen Behältern Probleme mit sich.

Darüber hinaus wird bei solchen Befestigungssystemen eine schnelle und einfache Montierbarkeit, gepaart mit einer vielseitigen Anpassbarkeit an unterschiedliche Lenker und Fahrradsysteme, gefordert. Diesem Anspruch werden die aus dem Stand der Technik bekannten Systeme nur unzureichend gerecht.

Zudem ist es bei den aus dem Stand der Technik bekannten Systemen problematisch gerade bei schweren Behältern oder holprigem Fahrbahnuntergrund eine zuverlässige und insbesondere rotationsfeste Befestigung am Lenker sicher zu stellen.

Aufgabe der vorliegenden Erfindung ist es folglich, ein Befestigungssystem zum Befestigen von Behältern an einem Lenker eines Fahrrades zur Verfügung zu stellen, das eine einfache Montierbarkeit gepaart mit einer großen Flexibilität, Zuverlässigkeit im Betrieb und Anpassbarkeit gewährleistet.

Diese Aufgabe wird durch ein Befestigungssystem gemäß Patentanspruch 1 gelöst.
Insbesondere wird diese Aufgabe gelöst durch ein Befestigungssystem zum Befestigen von Behältern wie Taschen oder Körben, im Folgenden auch als Gepäck bezeichnet, an einem Lenker eines Fahrrades, umfassend wenigstens eine, vorzugsweise zwei Lenkerschellen, die in einer Überstülprichtung über den Lenker überstülpbar sind und in übergestülpter Position den Lenker wenigstens abschnittsweise umgreifen, und einen Tragebügel, umfassend ein tragebügelseitiges Kupplungselement zur Aufnahme des Behälters, das an einem auskragenden Abschnitt des Tragebügels angeordnet ist, wobei der Tragebügel weiter einen Aufnahmeabschnitt umfasst, der vorzugsweise entgegen der Überstülprichtung mit den Lenkerschellen in Kopplungseingriff bringbar und so vorzugsweise ortsfest unter Festklemmen des Lenkers am Lenker positionierbar ist, weiter vorzugsweise umfassend wenigstens ein Sicherungsmittel, das im wesentlichen biegestreif zwischen dem auskragenden Abschnitt und einem vom Lenker verschiedenen Bauteil des Fahrrades und vorzugsweise einem Lenkvorbau kraftkoppelbar ist, so dass eine Rotation des auskragenden Abschnittes relativ zum Lenker verhindert wird.

Erfindungsgemäß umfasst das Befestigungssystem eine, vorzugsweise wenigstens zwei Lenkerschellen, die zusammen mit dem komplementär ausgebildeten Tragebügel ein Festlegen des Tragebügels am Lenker erlauben. Die koppelbare Ausführung der Lenkerschellen mit dem Aufnahmeabschnitt erlaubt eine sehr einfache Montage. Da insbesondere bei modernen Fahrrädern mit aufwändigen Schaltungssystemen im Bereich des Lenkers eine Vielzahl von Bowdenzügen und Kabelsystemen angeordnet sind, wird durch die Ausbildung eines Tragebügels der mittels wenigstens einer, vorzugsweise zwei Lenkerschellen, die über den Lenker gestülpt werden können, am Fahrradlenker befestigt werden kann, ein System zur Verfügung gestellt, das sehr einfach und unkompliziert montierbar zudem aber auch sehr betriebssicher ist werden kann. Dabei kann der Aufnahmeabschnitt integral mit dem Tragebügel ausgebildet sein oder auch als eigenständiges Element zur Verfügung gestellt werden.

Je nach Ausführung der Schellen erlaubt das Überstülpen der Lenkerschellen über den Lenker ein Vorpositionieren der Schellen, so dass der Tragebügel einfach und unkompliziert montierbar ist. Die Schellen sind vorzugsweise auch im übergestülpten Zustand und insbesondere vor dem endgültigen Festlegen am Tragebügel frei positionierbar und vorzugsweise um den Lenker rotierbar und/oder daran verschiebbar ausgebildet. Es ist auch möglich die Schellen nur in einem örtlich begrenzten Abschnitt und insbesondere punktuell an den Lenker anzulegen. Auch diese wird im Umfang der Erfindung als Überstülpen bezeichnet, wobei die Schellen den Lenker wenigstens Abschnittsweise, in diesem Fall über einen sehr kleinen Abschnitt umgreifen.

Eine Verdrehsicherung des Tragebügels relativ zum Lenker wird (zusätzlich) vorzugsweise durch das Sicherungsmittel zur Verfügung gestellt, welches im Wesentlichen biegestreif zwischen dem auskragenden Abschnitt und einem vom Lenker verschiedenen Bauteil des Fahrrades und vorzugsweise einem Lenkvorbau kraftkoppelbar ist. Vorzugsweise als Druckstabelement oder als Biegestabelement ausgebildet, erlaubt das Sicherungsmittel grundsätzlich so eine Kraftableitung von Lasten, die über das Kupplungselement in das Befestigungssystem eingeleitet werden. Insbesondere wird so eine Rotation des auskragenden Abschnittes relativ zum Lenker verhindert. Der Vorteil einer im Wesentlichen biegesteifen Ausführung ist die sehr einfache Kraftkopplung zwischen dem auskragenden Abschnitt und dem vom Lenker verschiedenen Bauteil des Fahrrades bzw. dem einem Lenkvorbau. So ist es möglich, dass Sicherungsmittel einfach an diesen Bauteilen anzulegen, zu befestigen, abzustützen etc. um Kräfte vom auskragenden Abschnitt über das Sicherungsmittel in das Fahrrad abzuleiten. Das Sicherungsmittel dient vorzugsweise also als Rotationssperre, um zu verhindern, dass sich der auskragende Abschnitt samt dem daran befestigten Kupplungselement und Gepäck relativ zum Lenker verdreht. Dies kann zwar auch durch eine ausreichende Befestigung und insbesondere Vorspannung der Schellen relativ zum Tragbügel um den Lenker unterbunden werden, effektiver und/oder zusätzlich erfolgt es jedoch über das Abstützen, Kraftkoppeln etc. des Sicherungsmittels an dem vom Lenker verschiedenen Bauteil des Fahrrades und vorzugsweise dem Lenkvorbau.

Auf weitere erfindungsgemäße Ausführungsformen des Sicherungselementes wird im Folgenden noch weiter im Detail eingegangen.

Vorzugsweise sind die Lenkerschellen als eigenständige Bauteile ausgebildet. Das erlaubt nicht nur das zur Verfügung stellen unterschiedlicher Lenkerschellen mit unterschiedlichen Abmessungen, so dass eine einfache Anpassbarkeit an unterschiedliche Lenker und insbesondere Lenkerdurchmesser bzw. Vorbauten gewährleistet ist, sondern auch den Austausch möglicherweise defekter Lenkerschellen, was die Lebensdauer des erfindungsgemäßen Befestigungssystems erhöht.

Es ist auch denkbar die Lenkerschellen integral oder verbindbar mit dem Tragebügel auszubilden. So können die Lenkerschellen u.a. als Haken- oder hakenähnliche Elemente am Tragebügel ausgebildet oder anordbar sein. Der Aufnahmeabschnitt kann ebenfalls integral am Tragebügel oder als eigenständiges Element ausgebildet und insbesondere daran festlegbar sein. Der Aufnahmeabschnitt kann beispielsweise ein Klemmelement und insbesondere ein Keilelement sein, dass unter Festklemmen des Lenker am Tragebügel oder den Schellen festlegbar ist. Auch ist es denkbar die Lenkerschellen über Verbindungselemente am Tragebügel anordbar auszubilden. Solche Verbindungselemente können beispielsweise Nut- und Feder- Eingriffselemente oder dergleichen Verbindungsmittel sein. Auf diese Weise sind unterschiedliche Schellen an dem Tragebügel, oder umgekehrt, anordbar, um beispielsweise das Befestigungssystem an unterschiedliche Lenker oder Vorbauten etc. anzupassen.

Vorzugsweise sind die Lenkerschellen aus demselben Material wie der Tragebügel ausgebildet. Dies erlaubt eine Optimierung der auf das Befestigungssystem wirkenden Spannungen und darüber hinaus die Verwendung von Materialien, die eine Beschädigung des Lenkers oder entsprechender neuralgischer Bauteile am Fahrrad verhindern. Da die Einzelteile des Befestigungssystems vorzugsweise aus Kunststoffmaterial hergestellt sind, wird darüber hinaus eine sehr kostengünstige Herstellbarkeit gewährleistet.

Vorzugsweise sind die Lenkerschellen als einseitig offene Schellen ausgebildet. Auf diese Weise sind sie sehr einfach über den Lenker überstülpbar. Die Schellen sind vorzugsweise als elastische Schellen bzw. als Schellen mit einem wenigstens teilweise elastischen Abschnitt ausgeführt, so dass eine Schelle sehr einfach und insbesondere vorzugsweise unter Presspassung über den Lenker schiebbar ist. Darüber hinaus ist es auf diese Weise möglich, eine Schelle für unterschiedliche Lenker und insbesondere Lenkerdurchmesser zu verwenden.
Es ist auch möglich die Schellen aus einem Gurtband oder dergleichen flexiblen Material herzustellen.
Vorzugsweise weisen die Lenkerschellen wenigstens zwei freie, vorzugsweise elastische, Endabschnitte auf, die einen Einführraum definieren, in den der Lenker beim Überstülpen einführbar und vorzugsweise durchführbar ist. Eine solche Ausführungsform findet vorzugsweise bei der Ausführung der Lenkerschellen als offene Schellen ihre Anwendung. Der Einführraum ist vorzugsweise ein Freiraum, in den der Lenker einsetzbar und so in den von der Schelle gebildeten Aufnahmeraum einführbar und vorzugsweise einschnappbar ist. Die Lenkerschelle ist vorzugsweise an die Geometrie und insbesondere die Querschnittsgeometrie des Lenkers adaptiert und vorzugsweise komplementär dazu ausgeführt.

Erfindungsgemäß weisen die Lenkerschellen vorzugsweise an ihren freien Endabschnitten Montagefortsätze auf. Der Tragebügel bzw. der Aufnahmeabschnitt des Tragebügels weist zu solchen Montagefortsätzen komplementäre Montagefortsatzaufnahmen auf, in die die Montagefortsätze vorzugsweise parallel zur Uberstülprichtung einführbar sind. Die Montagefortsätze an den Lenkerschellen sind also so ausgebildet, dass sie vorzugsweise gleitend in die Montagefortsatzaufnahmen am Tragebügel einführbar sind. Die Montagefortsatzaufnahmen sind dabei vorzugsweise so ausgebildet, dass sie eine Verschiebbarkeit der Montagefortsätze entlang einer Achse, und hier vorzugsweise einer Achse parallel zur Uberstülprichtung, erlauben. Dies garantiert eine Festlegung bzw. Führung der Montagefortsätze innerhalb der Montagefortsatzaufnahmen in einer Richtung abweichend zu dieser Einführrichtung. Es ist aber auch möglich, die Montagefortsätze bzw. die Montagefortsatzaufnahmen so auszuführen, dass nicht nur ein Einführen der Montagefortsätze entlang der Einführrichtung und vorzugsweise entlang der Uberstülprichtung möglich ist, sondern auch eine Adaption in einer Richtung, die dazu unterschiedlich verläuft, um beispielsweise den von dem Lenkerschellen definierten Aufnahmeraum für den Lenker zu verkleinern oder zu vergrößern, d. h. die Lenkerschellen an unterschiedliche Lenkerdurchmesser anzupassen.

Erfindungsgemäß sind die Montagefortsatzaufnahmen komplementär zu den Montagefortsätzen ausgeführt, und insbesondere so dass die Montagefortsätze lediglich entlang einer Achse innerhalb der Montagefortsatzaufnahme bewegbar ausgeführt sind. Dies erlaubt die Bewegung des Tragebügels entlang dieser Achse und somit auf sehr zuverlässige Art und Weise ein Festklemmen eines Lenkers, der innerhalb der Lenkerschellen und des Tragebügels angeordnet ist.
Vorzugsweise sind Befestigungsmittel vorgesehen, mittels derer die Schellen und insbesondere deren Montagefortsätze am Tragebügel und insbesondere in dessen Montagefortsatzaufnahmen festlegbar sind. Diese Befestigungsmittel sind dabei vorzugsweise derart ausgebildet, dass der Tragebügel mittels der Befestigungsmittel gegen die Schellen vorzugsweise unter Festklemmen des Lenkers vorspannbar ist. Solche Befestigungsmittel können beispielsweise Schraubmittel sein, die ein Vorspannen der Montagefortsätze gegen die Montagefortsatzaufnahmen bzw. daran bzw. darin ausgebildete Lagerelemente erlauben. Beispielsweise ist es möglich, an den Montagefortsätzen Gewindeelemente vorzusehen, in die dann entsprechende Schraubmittel eingreifen, die an den Montagefortsatzaufnahmen festgelegt sind, oder umgekehrt, und so den Tragebügel gegen die Lenkerschellen vorspannen bzw. fixieren.

Vorzugsweise sind die Befestigungsmittel so angeordnet, dass sie eine Kraft zwischen Tragebügel und Schellen generieren, die parallel zur Uberstülprichtung verläuft. Auf diese Weise wird zuverlässig der Lenker zwischen den Schellen und dem Tragebügel festgeklemmt, wobei Momentenbelastungen vermieden werden.

Das Befestigungssystem ist dabei vorzugsweise so ausgebildet, dass ein Festklemmen des Lenkers zwischen Schellen und Tragebügel erst dann erfolgt, wenn die endgültige Positionierung des Befestigungsmittels gefunden ist. So kann vorzugsweise der Tragebügel so mit den Schellen gekoppelt werden, dass die Kombination aus Tragebügel und Schellen noch um den Lenker verschwenkbar bzw. relativ dazu positionierbar ist. Erst nach endgültiger Positionierung erfolgt dann das Festlegen des Tragebügels bspw. ein Festklemmen des Lenkers und vorzugsweise ein Festlegen derart, dass keine Umpositionierung des Befestigungssystems bzw. des Tragebügels mehr möglich ist. Hier werden vorzugsweise Befestigungsmittel der zuvor genannten Art verwendet, die den Tragebügel fest gegen den Lenker fixieren.

Vorzugsweise ist der Tragebügel als U-förmiger oder dergleichen wenigstens zwei Arme aufweisender Bügel ausgebildet. Vorzugsweise bilden dabei die Arme wenigstens teilweise den auskragenden Abschnitt. Zudem ist es vorteilhaft, dass die Montagefortsatzaufnahmen in oder an den Armen ausgebildet und/oder anordbar sind. Der Aufnahmeabschnitt ist dabei vorzugsweise vom auskragenden Abschnitt entfernt ausgebildet oder anordbar, so dass sich der auskragende Abschnitt vom Aufnahmeabschnitt entfernt erstreckt.
Zur Bildung des Aufnahmeabschnittes ist vorzugsweise ein Abschnitt des Tragebügels oder ein daran anordbares Element komplementär zu einem Abschnitt des Lenkers ausgebildet. Hier ist es beispielsweise möglich, komplementär zum Lenker ausgeführte Aufnahmevertiefungen bzw. entsprechende Aufnahmelager, Keilflächenelement, Klemmelemente etc. zur Verfügung zu stellen. Auch ist es möglich, entsprechende Zwischenelemente am Aufnahmeabschnitt auszubilden, die eine sichere und in Position, Lagerungspunkten, Geometrie, optischem Erscheinungsbild, Lenkeraufnahmen etc. angepasste Lagerung des Tragebügels am Lenker erlauben. Solche Zwischenelemente können beispielsweise als Distanzstücke optional zwischen dem Aufnahmeabschnitt und dem Tragebügel angeordnet werden. Der Aufnahmeabschnitt weist vorzugsweise Führungselemente auf, die eine Positionierung und/oder eine Vorpositionierung des Lenkers vor dem Befestigen mittels der Befestigungsmittel und/oder dem Festlegen mittels der Schellen erleichtern und/oder bewirken.

Erfindungsgemäß sind die Montagefortsatzaufnahmen als optional anordbare Montagefortsatzaufnahmen vorgesehen, die am Tragebügel mittels Aufnahmemitteln an wenigstens einer Alternativposition befestigbar und mit den Schellen entgegen der Überstülprichtung in Kopplungseingriff bringbar sind. Es ist also denkbar, Montagefortsatzaufnahmen so auszubilden, dass sie bei Bedarf am Tragebügel mittels Aufnahmemitteln, beispielsweise Schrauben, Rastmitteln, Steckverbindungen, Bolzenverbindungen, Klebeverbindungen etc. positionierbar sind, und dann ein Festlegen des Tragebügels erlauben. Auf diese Weise ist eine einfache Adaptierbarkeit des Befestigungssystems an unterschiedliche Lenkervorbau- oder dergleichen Fahrradgeometrien möglich. Es ist denkbar, Montagefortsatzaufnahmen am Tragebügel selbst integral auszubilden und weitere optional vorhandene Montagefortsatzaufnahmen zur Verfügung zu stellen, die bei Bedarf am Tragebügel anordbar sind und ein Festliegen des Tragebügels am Lenker erlauben.

Vorzugsweise sind die optional anordbaren Montagefortsatzaufnahmen dabei so ausgebildet, dass sie in einer Richtung am Tragebügel befestigbar und vorzugsweise einsteckbar sind, die von der zuvor genannten Überstülprichtung abweicht und vorzugsweise orthogonal dazu ausgerichtet ist.

Die optional anordbare Montagefortsatzaufnahmen sind vorzugsweise aus demselben Material wie der Tragebügel und vorzugsweise aus einem Kunststoffmaterial ausgebildet.

Vorzugsweise ist das Kupplungselement an den Armen des Trageelementes, vorzugsweise an Endabschnitten der Arme, und vorzugsweise von den Montagefortsatzaufnahmen bzw. dem Aufnahmeabschnitt beabstandet angeordnet oder anordbar. Vorzugsweise bildet sich ein Befestigungssystem, das in Form einer Wippe am Lenker gelagert ist, wobei der Bereich umfassend den Aufnahmeabschnitt und die Schellen das "Wippenlager" bildet und der auskragende Bereich einen Wippenschenkel bildet. Dieser trägt das Kupplungselement, über das ein Behälter am Befestigungssystem befestigbar ist.

Unter Kupplungselement wird hier jedes Element verstanden, das das Befestigen eines Behälters erlaubt. Hier sind sowohl Schnellkupplungssysteme, wie Schienensysteme als auch Schraubkupplungs-, Rastkupplungs- oder dergleichen Kupplungssysteme mit umfasst.

Vorzugsweise umfasst das Kupplungselement einen Lagerkörper, der zwischen den beiden Armen des Tragebügels, vorzugsweise einklemmbar fixierbar, ausgebildet ist und vorzugsweise eine Festlegung des Kupplungselementes in unterschiedlichen Positionen und/oder in unterschiedlichen Ausrichtungen und so eine gezielte Ausrichtung eines daran befestigten Behälters erlaubt. Vorzugsweise ist der Lagerkörper insbesondere um eine Achse, die zwischen den beiden Armen des Trageelementes verläuft, rotierbar ausgebildet, so dass eine Winkeleinstellung des Kupplungselementes bzw. eines daran befestigten Behälters relativ zur Drehachse möglich ist.

Vorzugsweise weist der Lagerkörper wenigstens zwei voneinander wegweisende Stirnseiten auf, die komplementär und vorzugsweise parallel zu korrespondierenden Lagerflächen an den Armen des Tragebügels ausgebildet sind, und wenigstens ein Fixiermittel, mittels dem die Stirnseiten gegen die Lagerflächen den Lagerkörper fixierend pressbar sind. Ein solches Fixiermittel kann beispielsweise ein Bolzenmittel sein, das die jeweiligen Arme des Tragebügels gegen die Lagerkörper drängt, so dass die Stirnseiten gegen die Lagerflächen gepresst werden. Mittels einer solchen Presspassung ist eine Fixierung des Lagerkörpers relativ zum Tragebügel möglich.

Vorzugsweise weist das Kupplungselement und vorzugsweise die Stirnseiten eines Lagerkörpers ein Rastmittel auf, das mit einem Gegenrastmittel am Tragebügel und vorzugsweise an den Armen des Tragebügels und besonders bevorzugt an dessen Lagerflächen in lösbarer Kraftkopplung steht oder bringbar ist, oder umgekehrt und eine Festlegung des Kupplungselementes in unterschiedlichen Positionen und/oder in unterschiedlichen Ausrichtungen erlaubt. Ein solches Rastmittel bzw. Gegenrastmittel kann beispielsweise eine Rastverzahnung sein, vorzugsweise eine solche, die komplementär an den Stirnseiten und Lagerflächen ausgebildet ist. Hier sind sämtliche aus dem Stand der Technik bekannte Rastmittel und Gegenrastmittel anwendbar.

Wie erwähnt, weist vorzugsweise der Tragebügel wenigstens ein Sicherungsmittel auf, mit dem er gegen ein vom Lenker verschiedenes Bauteil des Fahrrades und vorzugsweise gegen einen Lenkervorbau festlegbar ist. Vorzugsweise ist das Sicherungsmittel als Biegestab- und/oder Druckstabelement und insbesondere als ein im Wesentlichen biegesteifes Bügelelement ausgebildet. Es stützt sich vorzugsweise gegen das vom Lenker verschiedene Bauteil des Fahrrades bzw. gegen den Lenkervorbau ab, und insbesondere vorzugsweise dann, wenn das Befestigungssystem durch das Gepäck belastet wird.

Vorzugsweise ist das Sicherungsmittel gegen das vom Lenker verschiedene Bauteil derart kraftkoppelbar, dass eine Rotation des auskragenden Abschnittes relativ zum Lenker wenigstens in einer Rotationsrichtung und vorzugsweise in zwei entgegengesetzte Rotationsrichtungen verhindert wird. Diese eine Rotationsrichtung ist vorzugsweise die Richtung, in die der auskragende Abschnitt durch das Gepäck aufgrund der Schwerkraft gedrängt wird. Es ist auch oder zusätzlich möglich das Sicherungsmittel so anzuordnen, dass eine Sicherung in wenigstens einer (weiteren) Rotationsrichtung erfolgt, zum Beispiel eine Richtung entgegengesetzt zu der obigen, beispielsweise wenn das Fahrrad über eine Bodenwelle fährt und das Gepäck in Folge nach oben geschleudert wird.

Das Sicherungsmittel kann als eigenständiges Bauteil oder integral mit dem Tragebügel ausgebildet sein. So ist eine integrale Verlängerung des Tragebügels zur Bildung des Sicherungsmittels denkbar.

Insbesondere bei der Ausbildung als eigenständiges Bauteil weist das Sicherungsmittel vorzugsweise wenigstens ein Arretierungsmittel auf, über dass es am Tragebügel insbesondere festlegbar verschwenkbar angeordnet ist. Es ist denkbar das Sicherungsmittel als Schwenkarm oder entsprechenden Bügel am Befestigungssystem anzulenken oder zu befestigen. Auf diese Weise ist eine Anpassung des Systems an unterschiedliche Fahrräder möglich.

Wie erwähnt ist vorzugsweise die Anlenkung des Sicherungsmittels am Tragebügel arretierbar ausgebildet. Hierzu können beispielsweise arretierbare Drehscharniere, Rastverbindungen etc. ihre Anwendung finden. Der Vorteil einer solchen Ausführungsform ist die biegesteife Arretierung des Sicherungsmittels am Tragebügel und so eine verbesserte Kraftkopplung.

Um die Anpassbarkeit zu erhöhen ist vorzugsweise das Sicherungsmittel zumindest Abschnittsweise an unterschiedlichen Positionen am Tragebügel und/oder in unterschiedlichen Ausrichtungen und/oder relativ zum Tragbügel anordbar und/oder festlegbar. Bei einer solchen Ausführungsform ist vorzugsweise das Sicherungsmittel in einem Verbindungsbereich der freien Arme angeordnet bzw. als ein solcher ausgebildet. Es umfasst vorzugsweise einen Abschnitt der vorzugsweise abschnittsweise rotierbar ist, so dass eine Anordnung an unterschiedlichen Positionen und/oder Ausrichtungen, insbesondere Verschwenkrichtungen möglich ist. Auf diese Weise kann dann eine optimale Lagerung gegen den vom Lenker entfernten Teil sicher gestellt und/oder ein Befestigungsmittel zur Befestigung des Sicherungsmittels an diesem entfernten Teil optimal positioniert werden.

Vorzugsweise bei obigen verschwenkbaren oder anpassbaren Anordnungen des Sicherungsmittels Tragebügel ist das Sicherungsmittel über wenigstens ein Befestigungsmittel an dem vom Lenker verschiedenen Bauteil des Fahrrades und vorzugsweise an dem Lenkervorbau festlegbar. Das Sicherungsmittel umfasst vorzugsweise dieses Befestigungsmittel. Ein solches Befestigungsmittel kann beispielsweise ein elastisches Fixierungsmittel, beispielsweise ein Klettverschluss oder ein dergleichen flexibler Bandverschluss ein. Es ist auch möglich, das Sicherungsmittel als eine weitere Schelle, ähnlich der Lenkerschellen, auszuführen. Auch kann das Sicherungsmittel als Anlageelement ausgebildet sein, das Lasten vorzugsweise entlang einer Achse ableitet bzw. einleitet.

Vorzugsweise ist das Sicherungsmittel vom Aufnahmeabschnitt und vom Kupplungselement entfernt angeordnet. Insbesondere ist bevorzugt, den Tragebügel und die daran angeordneten Sicherungsmittel, Lenker und Schellen so auszubilden, dass die Lenkerschellen einen Drehpunkt für den Tragebügel bilden, wobei Sicherungsmittel und Kupplungselement auf unterschiedlichen Seiten von diesem Drehpunkt angeordnet sind. Mit anderen Worten sind vorzugsweise entlang des Tragebügels die Montagefortsatzaufnahmen zwischen dem Sicherungsmittel und dem auskragenden Abschnitt angeordnet. Auf diese Weise werden Lasten, die über das Kupplungselement in den Tragebügel eingeleitet werden, sicher von den Schellen und dem Sicherungsmittel an das Fahrrad abgeleitet. Das Sicherungsmittel stellt vorzugsweise ein optionales Sicherungsmittel dar, das bei Bedarf und insbesondere beim Vorhandensein von sehr großen Lasten, insbesondere einem sehr großen oder schweren Behälter, seine Anwendung findet. Es ist folglich vorzugsweise wahlweise am Tragebügel anordbar. Hier sind sämtliche aus dem Stand der Technik bekannten Befestigungsmittel für ein solches Sicherungsmittel anwendbar.

Wie erwähnt ist vorzugsweise ist das Sicherungsmittel in einem Verbindungsbereich der freien Arme angeordnet bzw. bildet einen solchen. Insbesondere ist solch ein Verbindungsbereich der Bereich, in dem die freien Arme bei der Ausführung des Tragebügels als U-Bügel im"U-Bogenbereich" zusammengeführt sind.

Es ist auch möglich das Sicherungsmittel derart auszubilden, dass es je mit einem Abschnitt an einem Arm angeordnet und insbesondere befestigt ist. Hierzu ist das Sicherungsmittel vorzugsweise als Sicherungsbügel ausgebildet, der mit je einem Arm an einem Arm des Tragebügels befestigt oder befestigbar ist.

Vorzugsweise ist der Tragebügel derart unterseitig an den Lenker anpressbar ausgebildet, dass er mit wenigstens einem Teil des Sicherungsmittels unterseitig gegen den Lenkervorbau des Fahrrades oder einen daran benachbarten Bereich ansteht. Auf diese Weise können Lasten aus dem auskragenden Bereich sicher in das Fahrrad eingeleitet werden. Vorzugsweise dienen dabei die Lenkerschellen als Drehpunkte für eine solche momentenresultierte Krafteinleitung.

Insbesondere in diesem Zusammenhang sind die Lenkerschellen vorzugsweise so ausgebildet, dass sich die Uberstülprichtung Ru in vertikaler (Schwerkraft)-Richtung erstreckt. Der Tragebügel ist insofern als an den Lenkerschellen am Lenker aufgehängt.

Weitere Ausführungsformen der Erfindung ergeben sich aus den Unteransprüchen.

Im Folgenden wird die Erfindung anhand eines Ausführungsbeispiels beschrieben, das durch die beiliegenden Zeichnungen näher erläutert wird. Hierbei zeigen:
- Fig. 1 und 2: isometrische Ansichten von schräg unten einer Ausführungsform des erfindungsgemäßen Befestigungssystems;
- Fig. 3, 4 und 5: isometrische Explosionsdarstellungen der Ausführungsform gemäß Fig. 1; -
- Fig. 6: einen Querschnitt der Ausführungsform gemäß Fig. 1 in einem an einem Lenker montierten Zustand.
- Fig. 7 und 8: isometrische Detailansichten unterschiedlicher Lenkerschellen der Ausführungsform gem. Fig. 1;
- Fig. 9 bis 12: unterschiedliche Darstellungen einer weiteren Ausführungsform des erfindungsgemäßen Befestigungssystems;
- Fig. 13 bis 19: unterschiedliche Ansichten einer weiteren Ausführungsform des erfindungsgemäßen Befestigungssystems;
- Fig. 20 bis 22: unterschiedliche Ansichten einer weiteren Ausführungsform des erfindungsgemäßen Befestigungssystems;
- Fig. 23 bis 25: unterschiedliche Ansichten einer weiteren Ausführungsform des erfindungsgemäßen Befestigungssystems;
- Fig. 26 bis 28: unterschiedliche Ansichten einer weiteren Ausführungsform des erfindungsgemäßen Befestigungssystems;
- Fig. 29 bis 34: Detailansichten der Ausführungsform gemäß Fig. 26;
- Fig. 35 bis 37: unterschiedliche Ansichten einer weiteren Ausführungsform des erfindungsgemäßen Befestigungssystems; und
- Fig. 38 bis 40: unterschiedliche Ansichten einer weiteren Ausführungsform eines Befestigungssystems

Im Folgenden werden für gleiche und gleich wirkende Bauteile dieselben Bezugsziffern verwendet, wobei bisweilen Hochindizes ihre Anwendung finden.

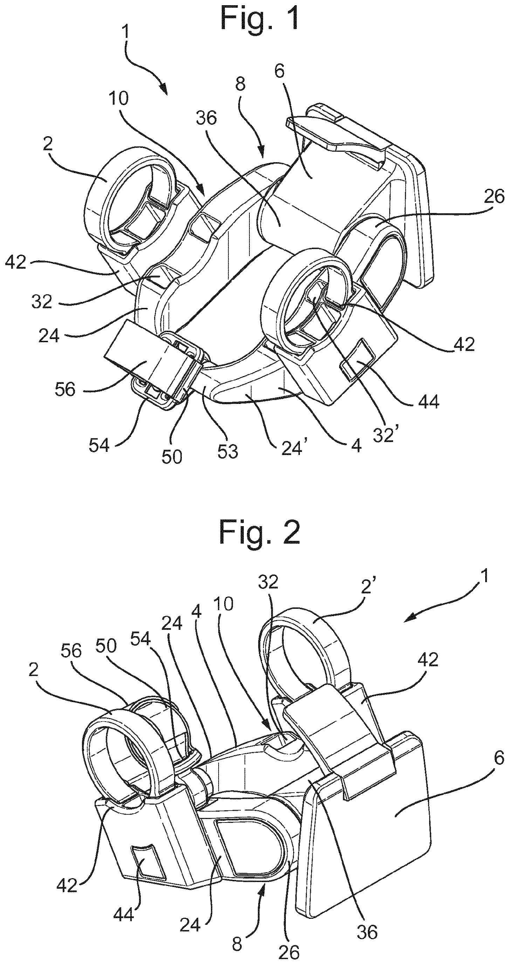

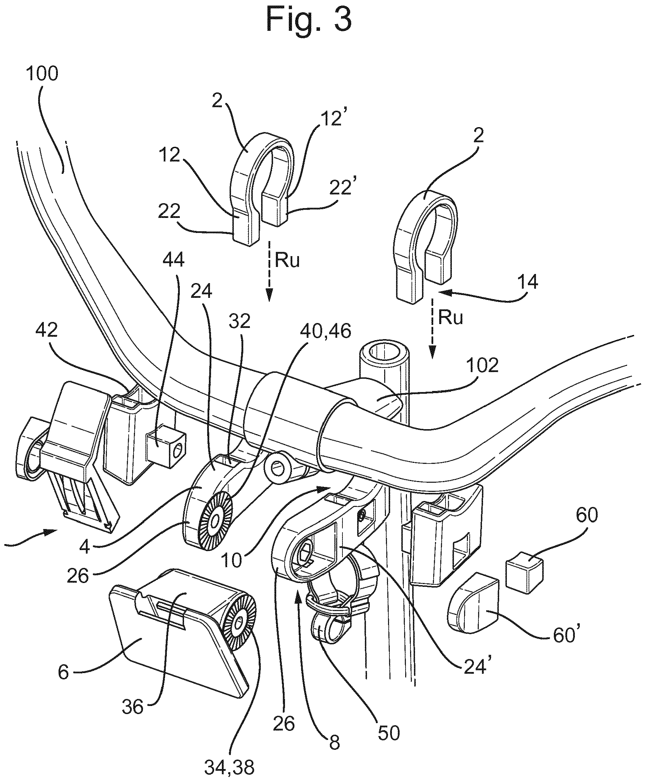

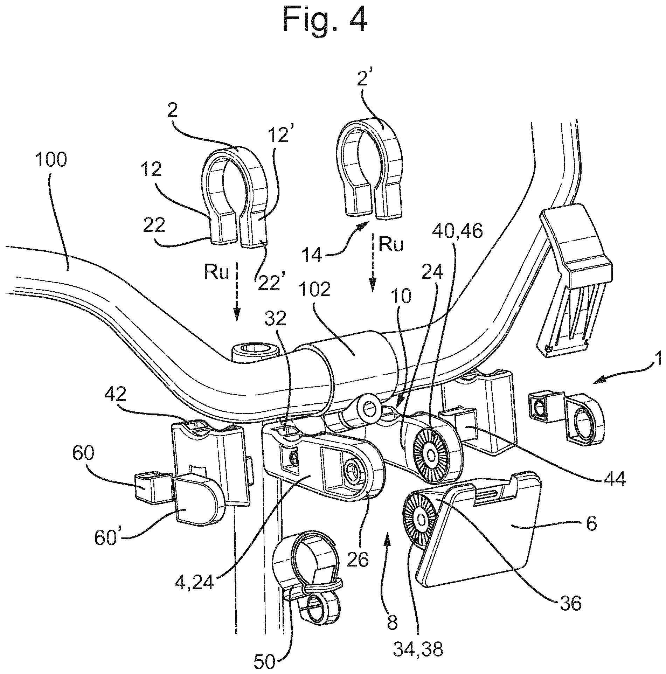

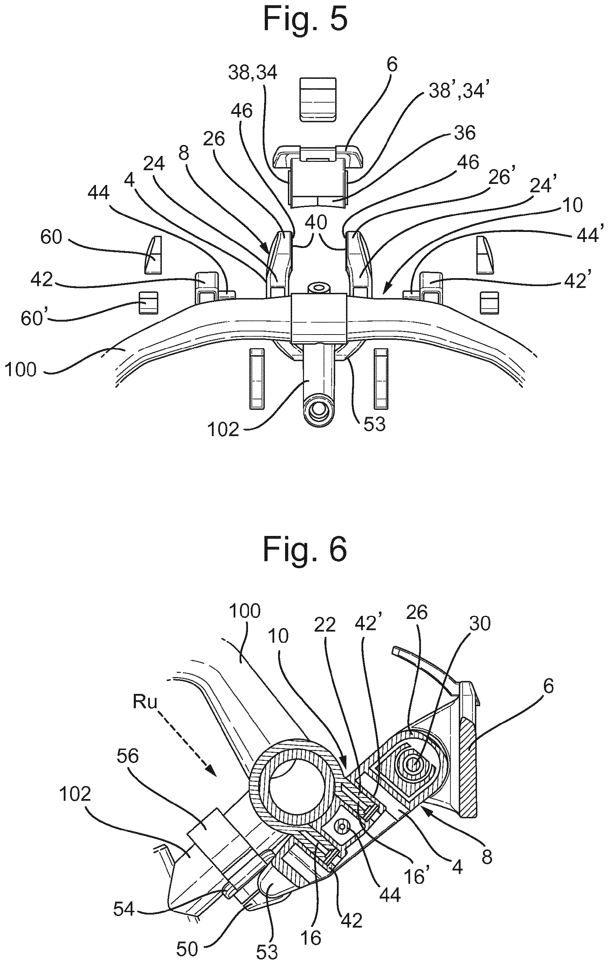

Die Figuren 1 und 2 zeigen isometrische Ansichten von schräg unten einer Ausführungsform des erfindungsgemäßen Befestigungssystems zum Befestigen von Behältern wie Taschen oder Körben an einem Lenker eines Fahrrades. Der Lenker 100 ist in den Figuren 3-6 dargestellt. Diese Ausführungsform gemäß Fig. 1 und 2 sind in den Figuren 3, 4 und 5 in einer Explosionsdarstellung (Fig. 3 und 4 von schräg vorne und Fig. 5 von oben) dargestellt. Fig. 6 zeigt schließlich die Ausführungsform gemäß den vorhergehenden Figuren in einem Querschnitt, montiert am Lenker 100.

Es sei erwähnt, dass die im Folgenden beschriebenen einzelnen Ausführungsformen und Spezifikationen des erfindungsgemäßen Befestigungssystems, insbesondere wie sie in den Ansprüchen definiert sind, einzeln, aber auch in Kombination miteinander verwendbar sind, und nicht nur auf die hier dargestellte und im jeweiligen Zusammenhang beschriebene Ausführungsform festgelegt sind.

Die in den Fig. 1 bis 6 dargestellte Ausführungsform des erfindungsgemäßen Befestigungssystems 1 umfasst zwei Lenkerschellen 2, die in einer Überstülprichtung Ru (siehe Fig. 3, 4 und 6) über den Lenker 100 eines Fahrrades überstülpbar sind, und in übergestülpter Position den Lenker 100 wenigstens abschnittsweise umgreifen. Weiter ist ein Tragebügel 4 vorgesehen, umfassend ein tragebügelseitiges Kupplungselement 6 zur Aufnahme eines Behälters, wie er eingangs bereits definiert wurde, das an einem auskragenden Abschnitt 8 des Tragebügels 4 angeordnet ist.

Der Tragebügel 4 umfasst einen Aufnahmeabschnitt 10, der entgegen der Überstülprichtung Ru mit den Schellen 2 in Kopplungseingriff bringbar und so vorzugsweise ortsfest unter Festklemmen des Lenkers 100 am Lenker positionierbar ist. Der Aufnahmeabschnitt ist hier integral mit dem Tragebügel ausgebildet. Wie insbesondere in Fig. 3, 4 und 6 dargestellt, kann der Tragebügel 4 bzw. der Aufnahmeabschnitt entgegen der hier dargestellten Überstülprichtung Ru mit den Schellen 2 in Kopplungseingriff gebracht und so am Lenker 100 fixiert werden.

Die Schellen 2 sind bei dieser Ausführungsform optional als eigenständige Bauteile ausgebildet. Auf diese Weise ist es möglich, unterschiedliche Schellen für unterschiedliche Lenkerdurchmesser, aber auch Lenkerdesgins, und auch unterschiedliche Stellen entsprechend den Anforderungen an das Befestigungssystem (große Lasten, kleine Lasten etc.) zur Verfügung zu stellen.

Selbiges gilt auch für den Tragebügel 4, der auf unterschiedliche Art und Weise zur Verfügung gestellt werden kann, wobei jeweils vorzugsweise immer identische Klemmen mit diesen in Kopplungseingriff bringbar sind. Auf diese Weise können also Sets von Befestigungssystemen zur Verfügung gestellt werden, mit unterschiedlichen Schellen und/oder unterschiedlichen Tragebügeln.

Optional sind die Lenkerschellen 2 als einseitig offene Schellen ausgebildet. Sie weisen vorzugsweise freie und insbesondere elastische Endabschnitte 12 auf, die eine Einführraum 14 definieren, in dem der Lenker 100 beim Überstülpen einführbar und vorzugsweise durchführbar ist. Es ist möglich, die kompletten Schellen 2 elastisch auszuführen oder aber auch nur Teilabschnitte davon.

Optional weisen die Lenkerschellen 2 vorzugsweise an ihren freien Endabschnitten 12 Montagefortsätze 22 auf. Diese Montagefortsätze 22 sind komplementär zu Montagefortsatzaufnahmen 32, 42 ausgebildet, die im Bereich des Aufnahmeabschnitts 10 ausgebildet bzw. anordbar sind. Die Montagefortsätze 22 sind dabei so ausgebildet, dass sie in die Montagefortsatzaufnahmen 32, 42 einführbar sind, und vorzugsweise parallel zur Uberstülprichtung R_{U} einführbar sind. Die Uberstülprichtung ist vorzugsweise durch eine Achse definiert, die die kürzeste Verbindung zwischen den übergestülpten Schellen und dem Tragebügel beschreibt (siehe insbesondere fig. 6). Es ist auch möglich, die Schellen 2 in einer anderen Richtung über den Lenker 100 zu stülpen und dann entsprechend dieser Vorgabe zu drehen, so dass sie in der Uberstülprichtung ausgerichtet sind. Insofern entspricht die Uberstülprichtung auch einer Einführrichtung, in der die Montagefortsätze 22 in die Montagefortsatzaufnahmen 32, 42 eingeführt werden.

Wie insbesondere in Fig. 6 dargestellt, sind vorzugsweise Befestigungsmittel 16 vorgesehen, mittels derer die Schellen 2 und insbesondere deren Montagefortsätze 22 am Tragebügel 4 und insbesondere in dessen Montagefortsatzaufnahmen 32, 42 festlegbar sind. Diese Befestigungsmittel 22 sind hier als Schraubmittel ausgebildet, die seitens der Montagefortsatzaufnahmen 32, 42 am Tragebügel 4 in die Montagefortsätze 22 bzw. in darin ausgebildete Gewindeelemente einschraubbar sind. Hier sind sämtliche aus dem Stand der Technik bekannten Befestigungsmittel anwendbar.

Optional ist das Befestigungsmittel 16 dabei derart ausgebildet, dass der Tragebügel 4 mittels der Befestigungsmittel 16 gegen die Schellen 2 vorzugsweise unter Festklemmen des Lenkers 100 vorspannbar ist. Mit anderen Worten sind vorzugsweise die Befestigungsmittel derart ausgebildet, dass der Tragebügel 4 wenigstens Abschnittsweise auf die Schellen 2 zu- und von diesen Wegbewegbar ist. Bei diesen Ausführungsformen kann beispielsweise das Befestigungsmittel so eingestellt werden, dass zwischen den Schellen 2 und dem Tragebügel 4 ein lockerer Verbund herrscht, so dass eine Rotation des Befestigungssystems um den Lenker 100 möglich ist. Nach genauer Ausrichtung des Befestigungssystems erfolgt dann ein endgültiges Festlegen der Befestigungsmittel, und so ein Festklemmen des Befestigungssystems am Lenker 100. Zur Abtragung von besonders hohen oder extremen Lasten kann darüber hinaus ein Sicherungsmittel 50 seine Anwendung finden, wie es im Folgenden noch näher beschrieben wird.

Optional ist der Tragebügel 4 als U-förmiger oder dergleichen wenigstens zwei Arme 24 aufweisender Bügel ausgebildet. Die Arme 24 bilden hier wenigstens teilweise den auskragenden Abschnitt 8. Zudem sind die Montagefortsatzaufnahmen 32, 42 in oder an den Armen 24 ausgebildet und/oder anordbar.

Im Detail sind hier integral mit dem Tragebügel ausgebildete Montagefortsatzaufnahmen 32 vorgesehen, in die bei Bedarf die Schellen 22 einführbar und festlegbar sind. Darüber hinaus sind optional anordbare Montagefortsatzaufnahmen 42 vorgesehen, die am Tragebügel 4 mittels Aufnahmemitteln 44 an wenigstens einer Alternativposition befestigbar sind und bei Bedarf ebenfalls mit den Schellen 2 in Kopplungseingriff bringbar sind. Hier sind identische Schellen, aber auch andere Schellen anwendbar, wenn dies nötig ist. Die optional anordbaren Montagefortsatzaufnahmen 42 sind über Aufnahmemittel 44, die hier als Einsteckrasten ausgebildet sind, mit dem Trageelement 4 verbunden. Es sei erwähnt, dass es nicht zwingend erforderlich ist, dass das Trageelement 4 Arme 24 umfasst. Hier können auch andere Ausführungsformen des Trageelementes mit den optional anordbaren Montagefortsatzaufnahmen 42 versehen werden. Vorzugsweise sind damit aber die Aufnahmemittel 44 so ausgebildet, dass sie ein Festlegen der optional anordbaren Montagefortsatzaufnahmen 42 in einer Richtung, abweichend von der Überstülprichtung R_{U}, erlauben. Auf diese Weise ist eine zuverlässige Krafteinleitung von den Schellen in den Tragebügel und von dort in den Lenker 102 gewährleistet.

Es ist erkennbar, dass mittels der optional anordbaren Montagefortsatzaufnahmen 42 hier eine Breitenanpassung des Befestigungssystems möglich ist. Auf diese Weise ist es beispielsweise möglich, das Befestigungssystem auch an breiteren Vorbauten 102 anzuordnen. Auch ist es möglich, auf diese Weise einen Montagefreiraum zwischen den Schellen 2 zur Verfügung zu stellen, der beispielsweise die Montage von entsprechenden elektronischen Geräten und insbesondere Fahrtenanzeigern, Tachometern etc. erlaubt.

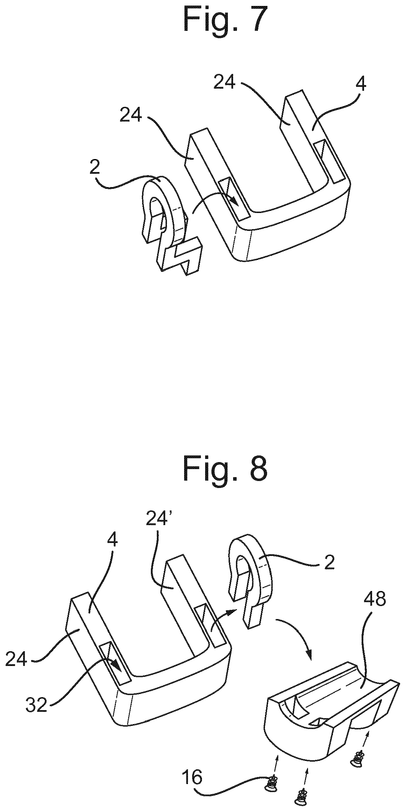

Obige Anpassung ist aber auch über eine Adaption der verwendeten Lenkerschellen 2 möglich, wie dies in den Fig. 7 und 8 exemplarisch dargestellt ist. Im direkten Vergleich, beispielsweise mit Fig. 5, ist erkennbar, dass die in Fig. 7 dargestellte Lenkerschelle einen breiteren Lagerabstand des hier ausschnittsweise dargestellten Tragebügels 4 am Lenker 100 (siehe Fig. 5) ermöglicht. Bei Bedarf können also entsprechend speziell adaptierte Lenkerschellen 2 verwendet werden, um eine Adaption an unterschiedliche Vorbauten 102, Lenker 100 oder weitere Gegebenheiten, beispielsweise zur Schaffung von Montageraum, zwischen den beiden Armen 24 des Tragebügels 4 zu bilden.

Wie in Fig. 8 dargestellt, ist es darüber hinaus möglich, entsprechende Adapterelemente 48 zur Verfügung zu stellen, die anstelle der Schellen 2 am Tragebügel 4 und bei diesem Beispiel in den Montagefortsatzaufnahmen 32 des Tragebügels 4 befestigt werden können. Auch hierzu sind optional geeignete Befestigungsmittel 16 vorgesehen. Die Adapterelemente ermöglichen ebenfalls eine Anpassung der Lagerung des Tragebügels 4 am Lenker 100, beispielsweise eine beabstandete Lagerung, eine Adaption an spezielle Lenkergeometrien, etc.

Wie insbesondere in den Figuren 1 und 2 erkennbar, sind die optional anordbaren Montagefortsätze auch optional so ausgebildet, dass sie eine Spezifikation des Aufnahmeabschnittes 10 am Tragebügel 4 erlauben. So ist mit den optional anordbaren Montagefortsatzaufnahmen 42 nicht nur eine veränderte Festlegung der Schellen, sondern auch eine adaptierte Anordnung des Befestigungssystems, hier eine erhöhte Anordnung am Lenker möglich. Mit anderen Worten stellen die optional anordbaren Montagefortsatzaufnahmen 42 auch optional anordbare Lageraufnahmen zur Verfügung, die eine adaptierte Anordnung des Befestigungssystems ermöglichen.

Optional ist der Aufnahmeabschnitt 10 wenigstens abschnittweise an die Lenkergeometrie bzw. die Geometrie des Bauteils, an das das Befestigungssystems festgeklemmt wird, adaptiert.

Mittels der wahlweise dimensionierbaren Schellen 2 und der optional anordbaren Montagefortsatzaufnahmen 42 wird ein Befestigungssystem zur Verfügung gestellt, das nahezu unbegrenzt vielseitig an unterschiedliche Lenkerdimensionen und Ausführungsformen anpassbar ist.

Vorzugsweise ist das zuvor erwähnte Kupplungselement 6 zur Festlegung des eingangs definierten Behälters an den Armen 24 des Trageelementes angeordnet. Optional ist bei dieser Ausführungsform das Kupplungselement 6 an Endabschnitten 26 der Arme und vorzugsweise von den Montagefortsatzaufnahmen 32, 42 beabstandet angeordnet bzw. anordbar.

Wie insbesondere in Fig. 6 dargestellt, bildet sich bei einer solchen Ausführungsform eine Wippenkonstruktion, wobei der Bereich der Schellen bzw. der Aufnahmeabschnitt 10 den Lagerungspunkt einer solchen Wippe bildet. Erfindungsgemäß ist dabei der Tragebügel 4 derart unterseitig an den Lenker 100 anpressbar ausgebildet, dass er mit wenigstens einem Teil des Tragebügels 4 und hier mit dem an diesem vorgesehenen Sicherungsmittel 50 unterseitig gegen den Lenkervorbau 102 des Fahrrades ansteht. Kräfte, die über das Kupplungselement 6 und einem daran angeordneten Behälter in das Befestigungssystem eingetragen werden, werden so folglich über die Schellen und den am Lenkervorbau 102 anstehenden Tragebügel 4 (hier im Bereich des Sicherungsmittels 50, das jedoch dazu nicht zwingend in einer Fixierbaren Form erforderlich ist, es reicht auch ein simpler Anlagebereich am Tragebügel aus, der am Lenkervorbau 102 ansteht) in das Fahrrad abgeleitet.

Optional umfasst das Kupplungselement 6 einen Lagerkörper 36, der zwischen den Armen 24 des Tragebügels 4 fixierbar ausgebildet ist. Ein solcher Lagerkörper 36 kann aber auch bei einem Tragebügel verwendet werden, der eine andere Ausführungsform als eine Ausführungsform mit zwei Armen 24 aufweist. Vorzugsweise ist der Lagerkörper zwischen den Armen bzw. am Tragebügel einklemmbar fixierbar ausgebildet, so dass eine sichere Festlegung möglich wird. Der Lagerkörper ist dabei vorzugsweise so ausgebildet, dass er eine Festlegung des Kupplungselementes 6 in unterschiedlichen Positionen und/oder in unterschiedlichen Ausrichtungen erlaubt. Auf diese Weise kann ein am Kupplungselement 6 positionierter Behälter relativ zum Fahrrad ausgerichtet werden.

Optional weist der Lagerkörper 36 wenigstens zwei voneinander wegweisende Stirnseiten 38 auf, die komplementär und vorzugsweise parallel zu korrespondierenden Lagerflächen 40 am Tragebügel 4 ausgebildet sind. Vorzugsweise sind diese Lagerflächen an den Armen 24 des Tragebügels 4 ausgebildet. Darüber hinaus ist wenigstens ein Fixiermittel 30 (siehe Fig. 6), beispielsweise ein Schraub- oder dergleichen Bolzen vorgesehen, mittels dem die Stirnseiten 38 gegen die Lagerflächen 40, den Lagerkörper fixierend, pressbar sind. Ein solches Fixiermittel 30 kann beispielsweise ein Bolzen sein, der sowohl das Trageelement 4 bzw. dessen Arme 24 und den Lagerkörper 36 des Kupplungselementes 6 durchdringt und an beiden Enden Festlegungsmittel und insbesondere Schraubmittel aufweist. Es ist aber auch möglich, den Lagerkörper 30 mit entsprechenden Aufnahmemitteln zu versehen, so dass von beiden Seiten Fixiermittel in Form von Schraubmitteln etc. eingeführt und am Lagerkörper festgelegt werden können, so dass der Lagerkörper 36 am Tragemittel 4 fixiert werden kann.

Optional weist das Kupplungselement 6 und vorzugsweise die Stirnseiten 38 ein Rastmittel 34 auf, das mit einem Gegenrastmittel 46 am Tragebügel 4 und vorzugsweise an dessen Armen 24 und insbesondere an den Lagerflächen 40 in lösbarer Kraftkopplung steht oder bringbar ist, und eine Festlegung des Kupplungselementes 6 in unterschiedlichen Positionen und/oder in unterschiedlichen Ausrichtungen erlaubt.

Wie bereits erwähnt, umfasst der Tragebügel 4 wenigstens ein Sicherungsmittel 50, mit dem er gegen ein vom Lenker 100 verschiedenes Bauteil des Fahrrades und vorzugsweise gegen einen Lenkervorbau 102 festlegbar ist. Ein solches Sicherungsmittel kann ein einfaches Anlagemittelumfassen, so dass der Tragebügel 4 über das Sicherungsmittel in einer Achsrichtung an dem entsprechenden Bauteil des Fahrrades und insbesondere den Lenkervorbau 102 ansteht, es kann aber auch ein mehraxiales Sicherungsmittel sein, wie dies beispielsweise in den vorliegenden Figuren dargestellt ist (siehe insbesondere Fig. 6). Das Sicherungsmittel 50 ist hier als integraler Bestandteil des Tragebügels ausgebildet und erstreckt sich als Biegestabelement in Richtung des Lenkervorbaues 102. Es umfasst hier sowohl eine Anlagefläche 54 als auch ein Befestigungsmittel 56, z.B. eine Sicherungsschelle oder ein dergleichen Schlingmittel 56, so dass eine mehraxiale Festlegung des Tragebügels am Lenkervorbau 2 bzw. an einem entsprechenden Bauteil am Fahrrad möglich ist.

Im Detail ist das Sicherungsmittel 50 vorzugsweise so ausgeführt dass es im Wesentlichen biegestreif zwischen dem auskragenden Abschnitt 8 und einem vom Lenker 100 verschiedenen Bauteil des Fahrrades und hier beispielsweise dem Lenkvorbau 102 kraftkoppelbar ist. Auf diese Weise wird eine Rotation des auskragenden Abschnittes 8 relativ zum Lenker 100 verhindert. Das Sicherungsmittel ist vorzugsweise wenigstens teilweise als Biegestab- und/oder Druckstabelement und insbesondere als ein im Wesentlichen biegesteifes Bügelelement ausgebildet.

Bei einer Ausführungsform ohne das zuvor genannte Befestigungsmittel 56 ist das Sicherungsmittel gegen das vom Lenker 100 verschiedene Bauteil derart kraftgekoppelt, dass eine Rotation des auskragenden Abschnittes 8 relativ zum Lenker 100 in wenigstens einer Rotationsrichtung (in Fig. 6 in Uhrzeigerrichtung um den Lenker 100) verhindert wird. Eine solche Rotation wird beispielsweise durch ein am Kopplungsmittel befestigtes Gepäck verursacht. Eine weitere Kraftkopplung wird durch das Befestigungsmittel 56 erreicht, wobei dann eine Rotation des auskragenden Teils 8 in zwei entgegengesetzte Rotationsrichtungen verhindert wird. Dies tritt beispielsweise durch das Wippen eines Gepäckstückes bei unebenem Fahrbahnuntergrund auf. Ein solches Befestigungsmittel 56 ist vorzugsweise so ausgebildet, dass damit das Sicherungsmittel 50 an dem vom Lenker 100 verschiedenen Bauteil des Fahrrades und vorzugsweise dem Lenkvorbau 102 festlegbar ist.

Das Befestigungsmittel 56 ist hier so ausgebildet, dass es, und insofern also "ein Abschnitt des Sicherungsmittels" an unterschiedlichen Positionen am Tragebügel 4
und/oder in unterschiedlichen Ausrichtungen und/oder relativ zum Tragbügel anordbar und/oder festlegbar ist. Dies erlaubt eine Anpassung des Befestigungssystems an unterschiedliche Fahrräder.

Wie bereits erwähnt, ist das Befestigungssystem bei dieser Ausführungsform so ausgebildet, dass entlang des Tragebügels 4 der Aufnahmeabschnitt 10 und vorzugsweise die Montagefortsatzaufnahmen 32, 42 zwischen dem Sicherungsmittel 50 und dem auskragenden Abschnitt 8 angeordnet sind. Das resultierende Wippensystem garantiert eine zuverlässige Kraftableitung vom Kupplungselement 6 in das Fahrrad bzw. hier den Lenkervorbau 102.

Optional ist das Sicherungsmittel 50 in einem Verbindungsbereich 53 der freien Arme 24 angeordnet. Insbesondere in diesem Zusammenhang ist es möglich, das Sicherungsmittel 50 wenigstens Abschnittsweise, hier also das Befestigungsmittel 56, so auszubilden, dass es an unterschiedlichen Positionen und/oder in unterschiedlichen Ausrichtungen am Tragebügel 4 anordbar ist. Dies ist hier beispielsweise durch eine Verschwenkbarkeit des Befestigungsmittels 56 des Sicherungsmittels 50 um den Verbindungsbereich 53 realisiert.

Es ist auch möglich, wenigstens einen Teil des Sicherungsmittels entlang dieses Verbindungsbereichs verschiebbar auszubilden, so dass bezüglich des Lenkervorbaus 2 eine außermittige Montage des Systems und gleichzeitige Festlegung durch das Sicherungsmittel möglich ist. Auch ist eine vorzugsweise arretierbare verschwenkbare Anordnung bzw. Ausbildung des Sicherungsmittels oder wenigstens eines Teils davon denkbar, wie dies im Folgenden noch im Detail erläutert wird.

Um die jeweiligen Befestigungsmittel und Fixiermittel des Befestigungssystems vor Verschmutzungen zu schützen und optisch zu kaschieren, sind geeignete Abdeckelemente 60 vorgesehen, die über die jeweiligen Befestigungs- bzw. Fixiermittel überstülpbar sind bzw. in entsprechenden Aufnahmen 62 dafür versenkbar und/oder festklemmbar ausgebildet sind.

Die unter Bezug auf die obige Ausführungsform genannten und beschriebenen Ausführungen, Details, Erläuterungen und Besonderheiten lassen sich auch auf die im Folgenden behandelten weiteren Ausführungsformen anwenden, außer dies ist explizit anders erwähnt. Insofern gilt obiges auch für das nun Folgende.

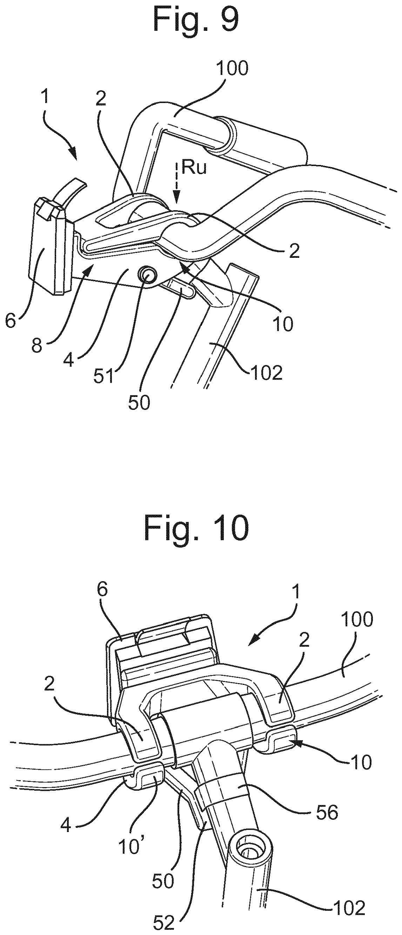

Die Fig. 9 bis 12 zeigen eine weitere Ausführungsform des erfindungsgemäßen Befestigungssystems 1. Auch hier sind zwei Lenkerschellen 2 vorgesehen, die in Form eines Bügelelementes ausgebildet sind und über einen Lenker 100 in eine Uberstülprichtung Ru überstülpbar ausgebildet sind. In diesem übergestülpten Zustand umgreifen sie den Lenker 100 wenigstens abschnittsweise. Über ein Befestigungsmittel 16 sind die Lenkerschellen 2 gegen einen Aufnahmeabschnitt 10 gekoppelt, der integral mit einem Tragebügel 4 ausgebildet ist. Der Aufnahmeabschnitt 10 ist hier in seiner Geometrie an die Lenkergeometrie wenigstens abschnittsweise angepasst. Der Tragebügel 4 weist wieder einen auskragenden Abschnitt 8 auf, an den ein Kupplungselement 6 zur Aufnahme einer Tasche oder eines Korbes oder eines dergleichen Gepäckstücks angeschlossen ist.

Das Befestigungsmittel 16 ist bei dieser Ausführungsform optional als Schraubmittel ausgebildet, wobei es darüber hinaus dergestalt wirkt, dass ein Festklemmen des Lenkers 100 zwischen den Lenkerschellen 2 und dem Aufnahmeabschnitt 10 bzw. dem Tragebügel 4 möglich ist.

Für eine weitere Lagesicherung und insbesondere bei montiertem Gepäckstück am Kupplungselement 6 ist ein Sicherungsmittel 50 vorgesehen, das hier als Bügelelement im Wesentlichen biegesteif zwischen dem auskragenden Abschnitt 8 und einem vom Lenker 100 verschiedenen Bauteil des Fahrrades und insbesondere einem Fahrradvorbei 102 kraftgekoppelt ist. Auf diese Weise wird eine Rotation des auskragenden Abschnitts 8 relativ zum Lenker 100 verhindert

Bei dieser Ausführungsform ist das Sicherungsmittel 50 drehgelenkig am Tragebügel angelenkt, so dass eine Anpassung an unterschiedliche Lenkervorbauten 102, aber hier auch eine Anpassung eines Winkels zwischen dem auskragenden Abschnitt 8 und dem Lenker möglich ist. Auf diese Weise kann eine Ausrichtung des Kupplungselementes und somit auch eines daran montierten Gepäckstückes erfolgen. Während ein erstes Ende 51 des Sicherungsmittels 50 drehgelenkig mit dem Tragebügel 4 verbunden ist, weist ein zweites Ende 52 bzw. ein Abschnitt vorzugsweise im Endbereich des Sicherungsmittels 50 ein Befestigungsmittel 56 auf, das hier als Schlingmittel ausgebildet ist. Es erlaubt die Festlegung des Sicherungsmittels 50 am Lenkervorbau 102 bzw. an einem vom Lenker 100 entfernten Bauteil. Auf diese Weise ist bei dieser Ausführungsform eine Kraftkopplung zwischen Tragebügel 4 bzw. auskragendem Abschnitt 8 und dem vom Lenker 100 verschiedenen Bauteil gewährleistet, so dass eine Rotation in wenigstens zwei entgegengesetzte Rotationsrichtungen verhindert wird.

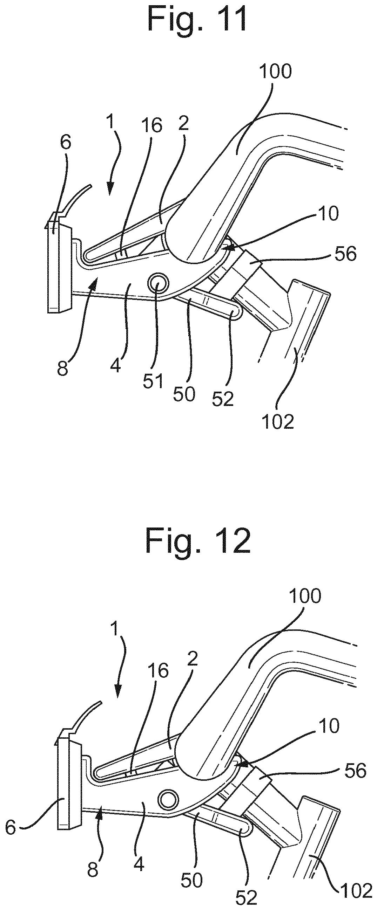

Wie in den Fig. 11 und 12 dargestellt, ist aufgrund der Kraftkopplung zwischen Lenkerschellen und Tragebügel 4 bzw. Aufnahmeabschnitt 10 eine Adaption an unterschiedliche Lenker 100 sehr einfach möglich. So kann sowohl ein Lenker mit großem Lenkerdurchmesser (siehe Fig. 11) als auch ein Lenker mit geringerem Lenkerdurchmesser (siehe Fig. 12) mit dem erfindungsgemäßen Befestigungssystem ausgerüstet werden. Vorzugsweise ist für eine solche einfache Anpassbarkeit wenigstens ein Teil der Lenkerschellen 2 bzw. ein Teil des Aufnahmeabschnitts 10 elastisch ausgebildet. Auch ist es möglich, entsprechende adaptierte Lenkerschellen und/oder Aufnahmeabschnittelemente zur Verfügung zu stellen, die bei Bedarf mit dem Befestigungssystem verwendet werden können. Auf eine solche Besonderheit wird im Folgenden noch im Detail eingegangen.

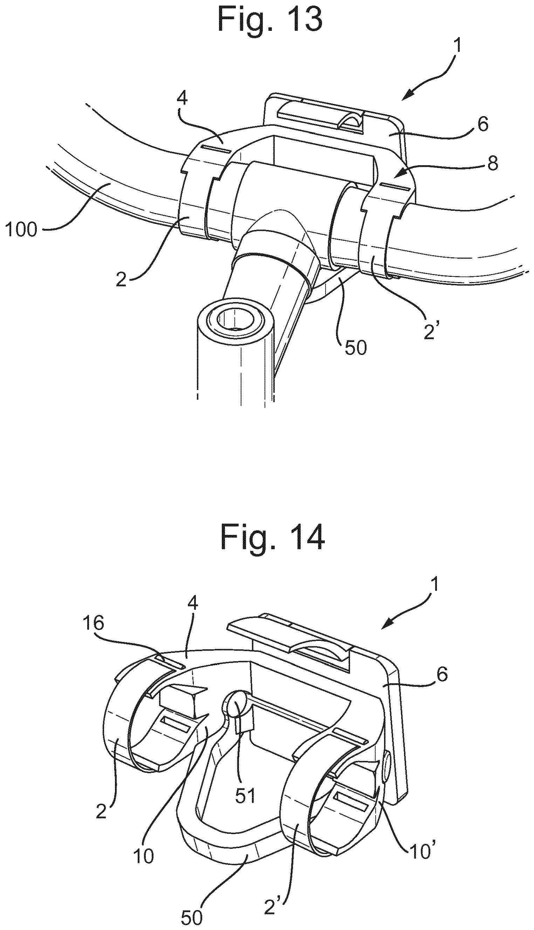

Die Fig. 13 bis 19 zeigen eine weitere Ausführungsform des erfindungsgemäßen Befestigungssystems 1. Auch hier sind zwei Lenkerschellen 2 vorgesehen, die über einen Lenker 100 überstülpbar ausgebildet sind. Bei dieser Ausführungsform sind die Lenkerschellen optional elastisch bzw. flexibel ausgebildet. Sie können beispielsweise aus einem Gurtband oder dergleichen Material, aber auch aus einem Metallband, Stahlband etc. hergestellt werden. Die Lenkerschellen 2 können mit einem Aufnahmeabschnitt 10 eines Tragebügels 4 in Kraftkopplung gebracht werden, so dass das Befestigungssystem sicher am Lenker 100 festgeklemmt werden kann.

Auch bei dieser Ausführungsform ist wieder ein Sicherungsmittel 50 in Form eines biegesteifen Bügelelementes vorgesehen, das verschwenkbar am Tragebügel 4 und insbesondere an einem auskragenden Abschnitt 8 angeordnet ist. Dazu greift das Sicherungsmittel 50 mit einem ersten Ende 51 scharnierend in den Tragebügel 4 ein. Ein zweites Ende 52 bzw. ein zweiter Abschnitt, vorzugsweise im Endbereich des Sicherungsmittels 50, kann optional über ein Befestigungsmittel 56 und hier beispielsweise über ein Schlingelement am Lenkervorbau 102 oder an einem anderen Bauteil des Fahrrades befestigt werden. Auf diese Weise erhält man wieder eine Kraftkopplung zwischen dem Tragebügel 4 bzw. einem entsprechenden auskragenden Abschnitt 8, an dem ein Kupplungselement 6 befestigt ist und dem Lenkervorbau 102, um so eine Rotation des auskragenden Abschnitts 8 zu verhindern.

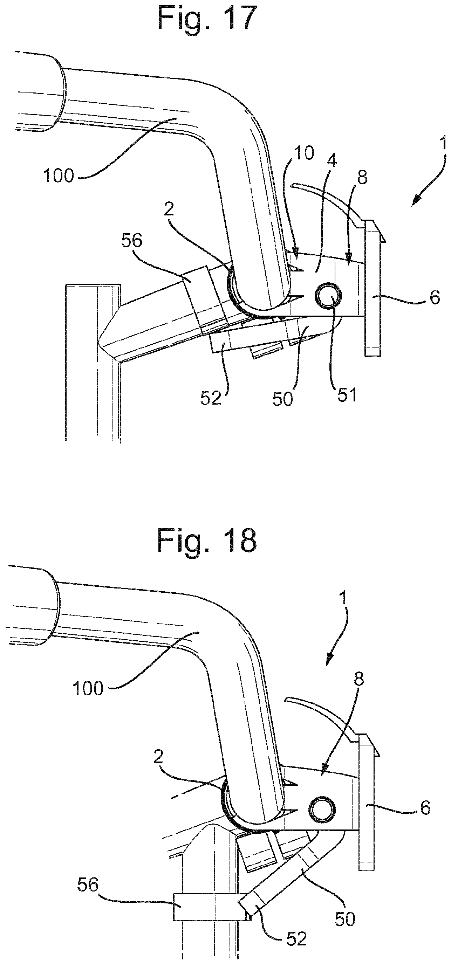

Wie in den Fig. 17 bis 19 dargestellt ist, kann über die verschwenkbare Anordnung des Sicherungsmittels 50 und über eine wenigstens abschnittsweise flexibel bzw. elastische Ausführung des Aufnahmeabschnitts 10 und/oder der Lenkerschellen 2 eine Anpassung an unterschiedliche Fahrradgeometrien bzw. Vorbaugeometrien vorgenommen werden.

Grundsätzlich ist es in diesem Zusammenhang möglich, das Sicherungsmittel nicht nur verschwenkbar, sondern auch in seinen Abmessungen anpassbar auszubilden. Hier sind entsprechende Teleskopsysteme, Adaptersysteme oder dergleichen Einrichtungen anwendbar, um das Sicherungsmittel an unterschiedliche Fahrradgeometrien anzupassen. Auch ist es möglich das Sicherungsmittel mit Austauschbaren Elementen zu versehen, um das Sicherungsmittel an unterschiedliche Fahrradgeometrien anzupassen

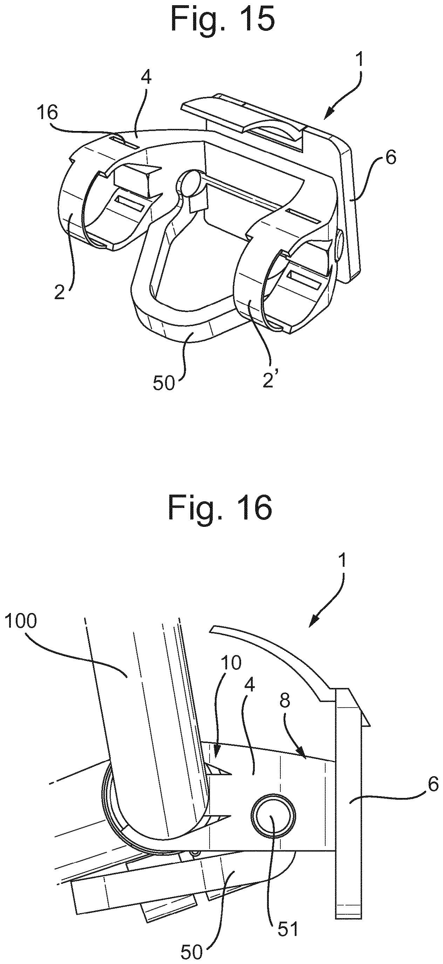

Wie in den Fig. 14 und 15 dargestellt, werden die Lenkerschellen 2 optional über entsprechende Rast-, Haken-, Klemm-, Quetsch, -Schraub-, Klett- oder dergleichen Befestigungsmechanismen am Aufnahmeabschnitt 10 des Tragebügels 4 befestigt. Um eine zuverlässige Sicherung zu gewährleisten, werden dazu entsprechende Befestigungsmittel 16 verwendet, die eine Festlegung des Befestigungssystems am Lenker 100 erlauben.

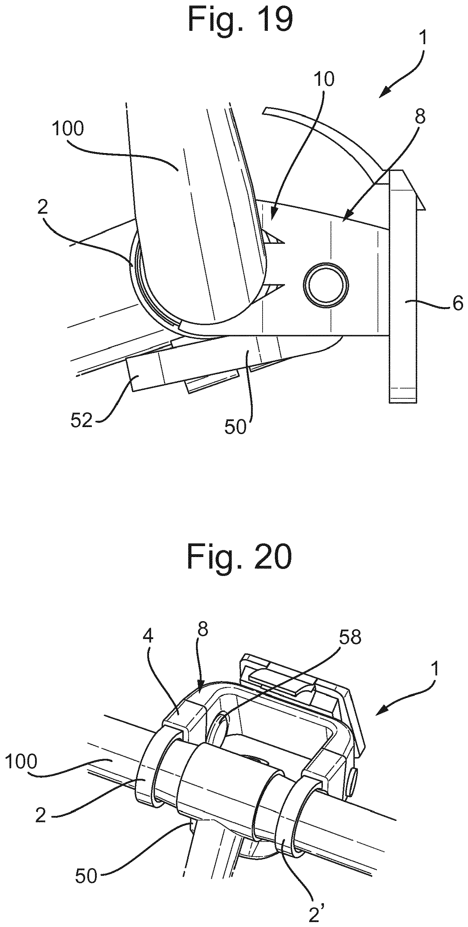

Die Fig. 20 bis 22 zeigen eine weitere Ausführungsform des erfindungsgemäßen Befestigungssystems, das dem zuvor beschriebenen Befestigungssystem sehr ähnlich ist. Unterschiede finden sich vor allem in der Befestigung der Lenkerschellen 2, die hier über ein Schraub- oder Rast-Befestigungsmittel 16 am Tragebügel 4 befestigt und vor allem so vorgespannt werden können, dass eine sichere Positionierung des Befestigungssystems 1 am Lenker 100 gewährleistet ist.

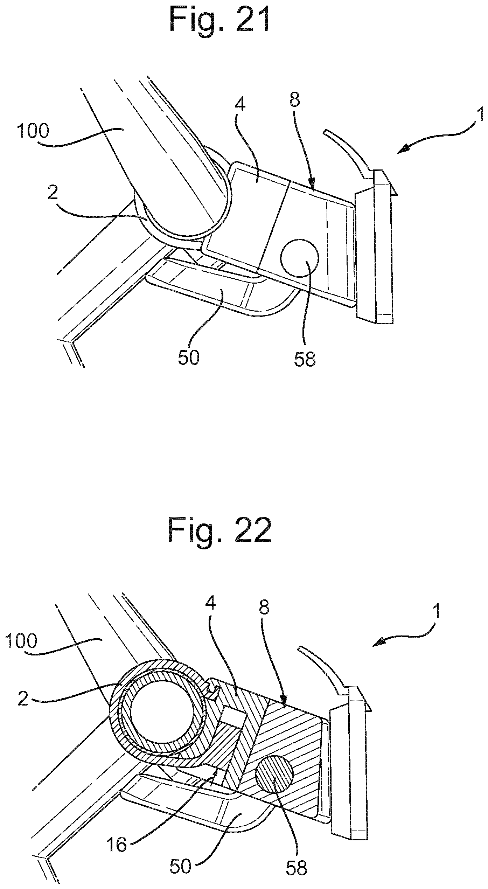

Wieder ist ein Sicherungsmittel 50 in Form eines verschwenkbar am Tragebügel 4 bzw. an einem daran vorgesehenen auskragenden Abschnitt 8 angeordneten biegesteifen Bügelelementes vorgesehen. Optional weist dieses Sicherungsmittel 50 ein Arretierungsmittel 58 auf, so dass eine verschwenkte Arretierung relativ zum Tragebügel 4 möglich ist. Auf diese Weise kann das Sicherungsmittel 50 in unterschiedlichen Auslenkungen relativ zum Tragebügel 4 positioniert und fixiert werden. Auf diese Weise ist eine Anpassung des Befestigungssystems an unterschiedliche Vorbaugeometrien möglich. Wie in den Fig. 21 und 22 erkennbar, ist auf diese Weise eine Kraftkopplung zwischen Tragebügel 4 bzw. auskragenden Abschnitt 8 und Vorbau 102 möglich, wobei eine Rotation in wenigstens einer Rotationsrichtung (hier in einer Richtung in Uhrzeigersinn) verhindert werden kann. Durch die Verwendung eines optional anbringbaren Schlingenmittels oder dergleichen Befestigungsmittels, wie es zuvor bei den anderen Ausführungsformen beschrieben ist, ist bei diesen Befestigungssystem ebenfalls eine weitere Fixierung, u.a. gegen eine Rotation in entgegengesetzter Richtung möglich.

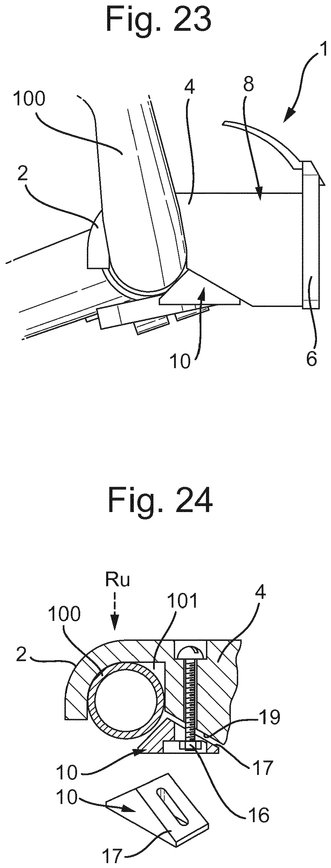

Die Fig. 23 bis 25 zeigen eine weitere Ausführungsform des erfindungsgemäßen Befestigungssystems 1. Während bei den vorhergehenden Ausführungsformen die Lenkerschellen 2 meist lösbar zum Tragebügel 4 und Aufnahmeabschnitt 10 ausgebildet waren, ist das hier gezeigte System dadurch charakterisiert, dass die Lenkerschellen 2 vorzugsweise fest bzw. integral mit dem Tragebügel 4 verbunden sind. Der Tragebügel 4 weist wieder einen auskragenden Abschnitt 8 auf, an dem ein Kupplungselement 6 vorgesehen ist, das zur Aufnahme eines Gepäckstückes, wie es zuvor beschrieben wurde, dient. Die Festlegung dieser Kombination aus Lenkerschellen 2 und Tragebügel 4 erfolgt über einen als eigenständiges Bauteil 10 ausgebildeten Aufnahmeabschnitt 10, der über ein Befestigungsmittel 16 mit den Lenkerschellen 2 bzw. dem Tragebügel 4 derart kraftkoppelbar ist, dass ein Festklemmen des Befestigungssystems am Lenker 100 möglich ist.

Bei der Montage wird der mit den Lenkerschellen 2 versehene Tragebügel 4 so auf dem Lenker 100 aufgesetzt, dass die Lenkerschellen 2 den Lenker wenigstens abschnittsweise umgreifen. Das Aufsetzten bzw. Überstülpen der Lenkerschellen 2 erfolgt wieder in einer Überstülprichtung Ru. Anschließend kann über das Befestigungsmittel 16 der Aufnahmeabschnitt 10 befestigt werden, wodurch das Befestigungssystem am Lenker 100 festgeklemmt wird.

Optional ist der Aufnahmeabschnitt 10 dazu als Keilelement ausgebildet, wobei er geeignete Keilflächen 17 aufweist, die mit komplementären Gegenteilflächen 19 in Presspassung bringbar sind, und so eine Vorspannung des Befestigungssystems am Lenker 100 bewirken. In diesem Zusammenhang ist es möglich, den Aufnahmeabschnitt 10 bzw. das entsprechend ausgebildete Keilelement mit einem Schienensystem vorzugsweise verschiebbar am Tragebügel 4 zu befestigen, so dass zwar ein Befestigen und Entnehmen des Befestigungssystems 1 am Lenkerbügel 100 möglich ist, wenn das Befestigungsmittel 16 gelöst ist, die einzelnen Bauteile jedoch in einer Baugruppe kombiniert bleiben. Ein solches Schienen- oder dergleichen Gleitsystem erlaubt das Verschieben des Aufnahmeabschnitts 10 relativ zum Tragebügel 4 unter gleichzeitigem Vergrößern und Verkleinern eines Aufnahmeraumes 101 für den Lenker 100.

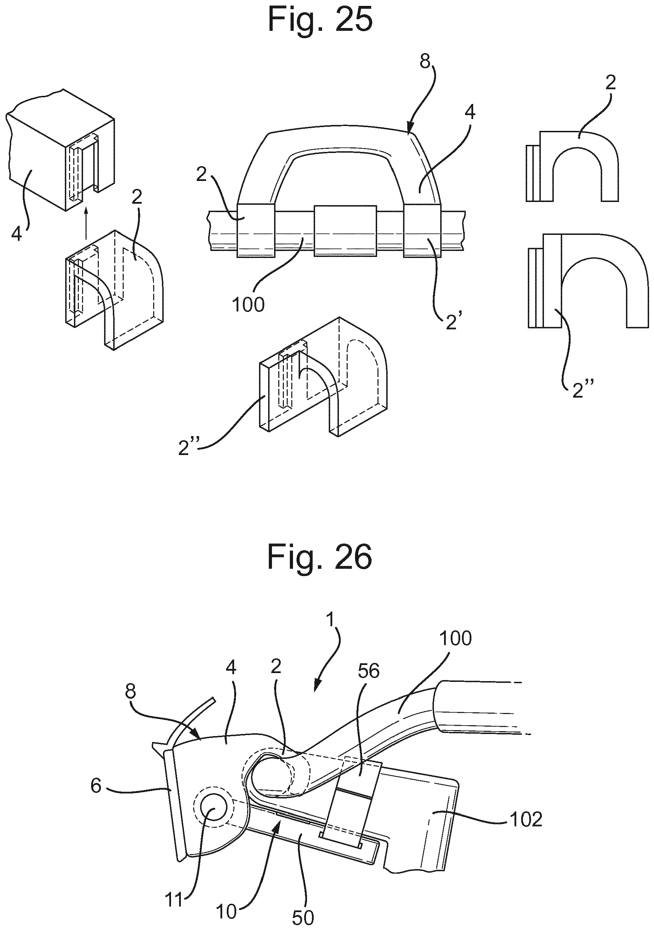

Wie in Fig. 25 dargestellt, ist es darüber hinaus möglich, die Lenkerschellen 2 lösbar zum Tragebügel 4 auszubilden, und über entsprechende Befestigungsmittel daran befestigbar auszugestalten. Auf diese Weise könne unterschiedliche Lenkerschellen am Tragebügel 4 befestigt werden, um das System auf einfache Weise an unterschiedliche Lenker 100 oder weitere Bauteile eines Fahrrades anpassbar auszugestalten. Hier sind z.B. entsprechende Nut- und Federsysteme oder dergleichen Befestigungssysteme anwendbar. Eine solche anpassbare Ausgestaltung ist bei nahezu allen Systemen, wie sie hier gezeigt sind, anwendbar. Darüber hinaus ist es natürlich möglich, die Lenkerschellen wenigstens abschnittsweise elastisch oder flexibel zu gestalten, um unterschiedliche Lenker 100 darin aufzunehmen.

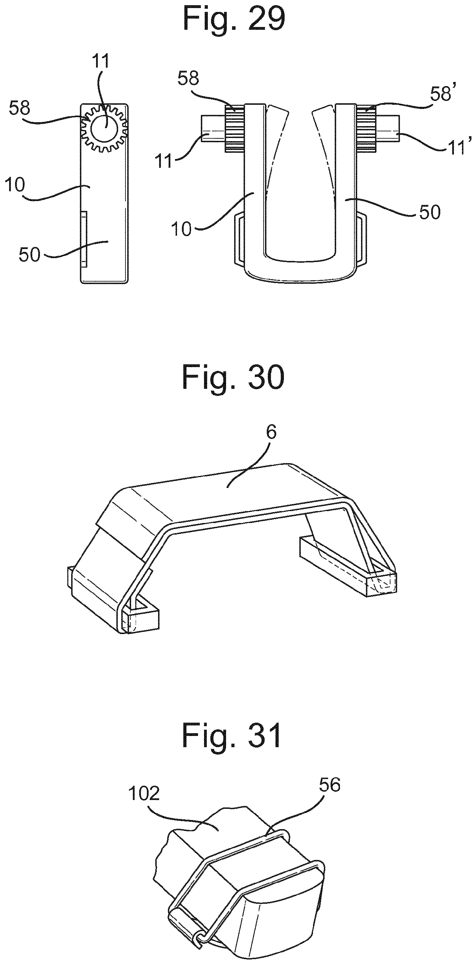

Die Fig. 26 bis 34 zeigen unterschiedliche Ansichten einer weiteren Ausführungsform des erfindungsgemäßen Befestigungssystems 1, wobei die Fig. 29 bis 34 Detaillösungen dazu offenbaren.

Die dargestellte Ausführungsform des erfindungsgemäßen Befestigungssystems umfasst wieder Lenkerschellen 2, die integral (oder aber austauschbar befestigbar) mit einem Tragebügel 4 ausgebildet sind. Der Tragebügel 4 weist einen auskragenden Abschnitt 8 auf, an dem ein Kupplungselement 6 befestigt ist, das dem Befestigen von Behältern, wie Taschen oder Körben, dient, wie dies bereits mehrfach beschrieben wurde.

Die Lenkerschellen 2 sind so ausgebildet, dass sie in einer Überstülprichtung R_{U} über einen Lenker 100 überstülpbar sind. Zur Festlegung am Lenker 100 ist bei dieser Ausführungsform ein Aufnahmeabschnitt 10 vorgesehen, der relativ zum Tragebügel 4 verschwenkbar ausgebildet ist. Dazu ist eine Scharnierung 11 ausgebildet, die ein Verschwenken des Aufnahmeabschnitts 10 relativ zum Tragebügel 4 erlaubt.

Der Aufnahmeabschnitt 10 ist bei dieser Ausführungsform integral mit einem Befestigungsmittel 50 ausgebildet, wobei beide als biegesteifes Bügelelement mit dem Tragebügel 4 verbunden sind. Über die Scharnierung 11 können insofern also sowohl der Aufnahmeabschnitt 10 als auch das Sicherungsmittel 50 relativ zum Tragebügel 4 und dessen auskragendem Abschnitt 8 verschwenkt werden.

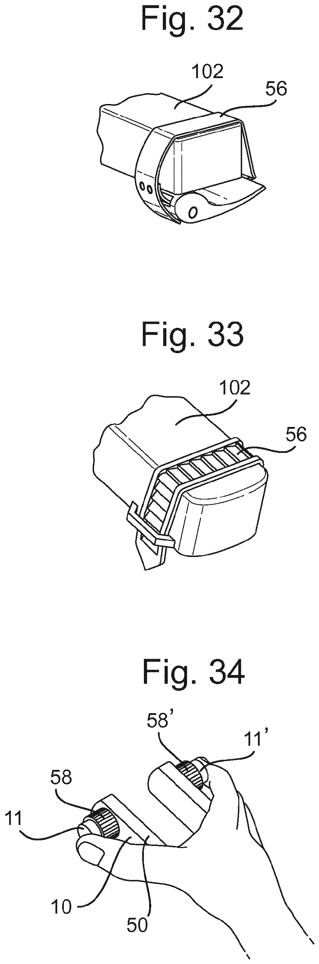

Wie in den Fig. 29 und 34 dargestellt, umfasst die Scharnierung 11, um den Aufnahmeabschnitt 10 und das Sicherungsmittel 50 relativ zum Tragebügel 4 zu verschwenken, ein Arretierungsmittel 58, das eine Arretierung des Sicherungsmittels 50 und des Aufnahmeabschnitts 10 in unterschiedlichen Ausrichtungen relativ zum Tragebügel 4 erlaubt. Indem die Arretierung 58, hier beispielsweise eine Rasterarretierung, so eingestellt wird, dass der Lenker 100 zwischen den Lenkerschellen 2 und dem Aufnahmeabschnitt 10 festgeklemmt wird, ist eine sichere Festlegung des Befestigungssystems 1 am Lenker 100 möglich. Durch eine zusätzliche Fixierung des Sicherungsmittels 50 über ein Befestigungsmittel 56 und hier beispielsweise über ein Schlingmittel, ist eine zusätzliche Lagesicherung des Befestigungssystems am Lenker 100 realisierbar.

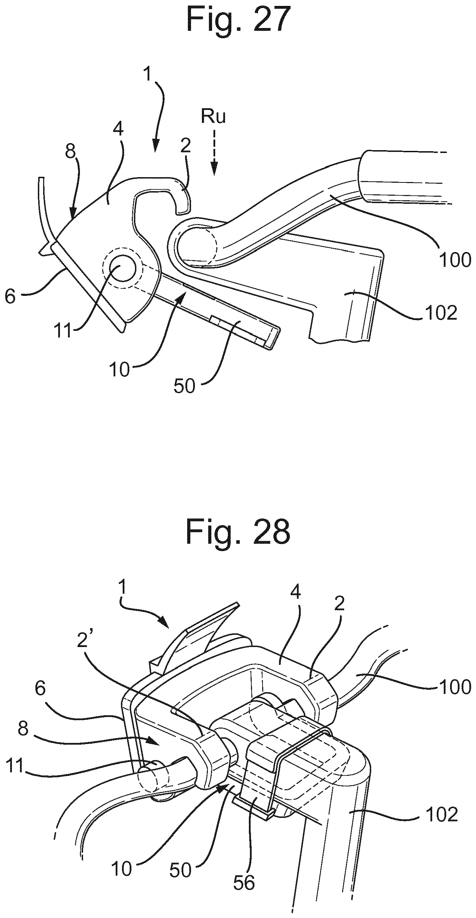

Wie in Fig. 28 gezeigt, ist das Arretierungsmittel 58 bei dieser Ausführungsform als Druckarretierung ausgebildet, wobei es durch einen axialen Druck in Richtung der Schwenkachse des Sicherungsmittels bzw. des Aufnahmeabschnitts 10 gelöst und in Schwenkzustand gebracht werden kann. Durch ein Lösen des Drucks greift das Arretierungsmittel 58 wieder in den Arretierungszustand und fixiert das Sicherungsmittel 50 bzw. den Aufnahmeabschnitt 10 relativ zum Tragebügel 4. Um eine solche lösbare Arretierung zu verbessern, sind optional das Sicherungsmittel 50 bzw. der Aufnahmeabschnitt 10 als um wenigstens eine Achse elastisches Bügelelement ausgebildet.

Die Fig. 30 bis 33 zeigen unterschiedliche Ausführungsformen eines Befestigungsmittels 56, wie es bei der zuvor beschriebenen, aber auch bei allen anderen Ausführungsformen zur Fixierung des Sicherungsmittels 50 an einem vom Lenker entfernten Bauteil und insbesondere einem Vorbau 102 angewendet werden kann. Hier sind beispielsweise Klettverschlüsse (siehe Fig. 30), elastische und insbesondere Hakenelementverschlüsse (Fig. 31), Kipphebelverschlüsse (Fig. 23), als auch Rastverschlüsse (Fig. 33) anwendbar.

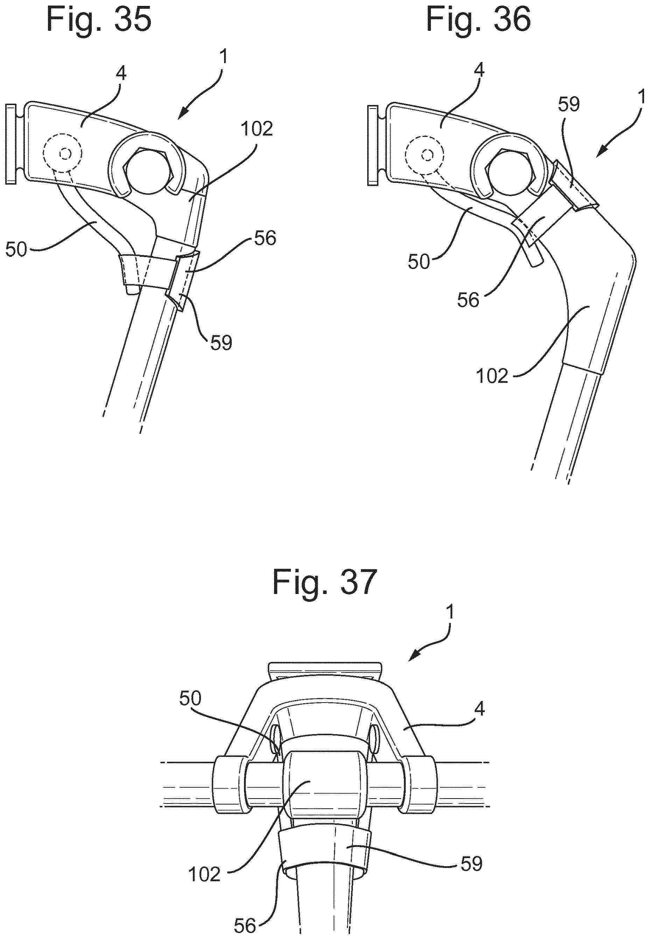

Die Fig. 35 bis 37 zeigen eine weitere Ausführungsform des erfindungsgemäßen Befestigungssystems 1, die im Prinzip der zuvor beschriebenen Ausführungsform entspricht. Relevant ist hier, dass das verwendete Sicherungsmittel 50 als ein austauschbares Sicherungsmittel 50 ausgebildet ist, wobei unterschiedliche Geometrien des Sicherungsmittels 50 zur Befestigung des Befestigungssystems an unterschiedlichen Lenkervorbauten 102 angewendet werden können. Dazu ist das Sicherungsmittel 50 lösbar mit einem Tragebügel 4 verbunden. Je nach Vorbau 102 werden zur Fixierung des Tragebügels 4 unterschiedliche Sicherungsmittel 50 verwendet.

Bei dieser Ausführungsform auch relevant ist die besondere Ausführungsform des Befestigungsmittels 56, das hier ebenfalls als Schlingmittel ausgeführt ist. Das Schlingmittel 56 umfasst hier eine Lagerplatte 59, die einer verbesserten Fixierung des Befestigungs- bzw. des Schlingmittels 56 am Vorbau 102, aber auch der Aufnahme von Werbeelementen oder entsprechenden Informationselementen dienen kann. Die Lagerplatte 59 kann in unterschiedlichen Ausführungsformen und Materialien zur Verfügung gestellt werden.

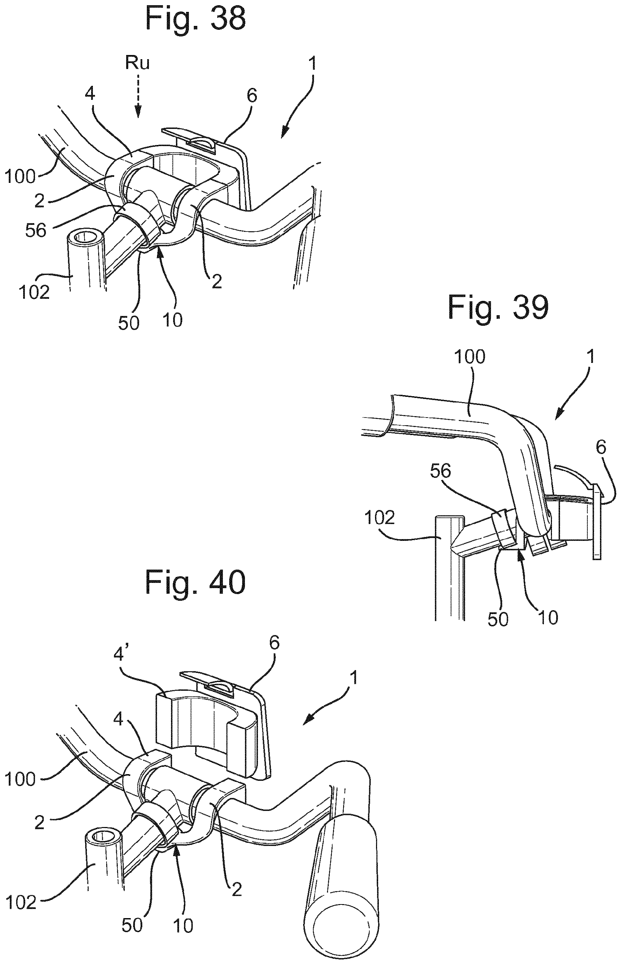

Die Fig. 38 bis 40 zeigen eine weitere Ausführungsform eines Befestigungssystems 1. Auch hier sind Lenkerschellen 2 so ausgebildet, dass sie in einer Uberstülprichtung R_{U} über einen Lenker 100 überstülpbar sind. Die Befestigungsschellen 2 sind mit einem Tragebügel 4 verbunden bzw. optional verbindbar (siehe Fig. 40), an dem seinerseits ein Kupplungselement 6 zur Aufnahme eines Gepäcks angeordnet ist. Integral mit den Lenkerschellen ausgebildet ist ein Aufnahmeabschnitt 10, der hier als Hebelelement derart ausgebildet ist, dass er durch ein Festlegen an einem Vorbau 102 eine Kopplungskraft auf den Lenker 100 über die Lenkerschellen 2 aufbringt. Insofern besteht das erfindungsgemäße Befestigungssystem 1 also aus einer Bügelanordnung umfassend den Aufnahmeabschnitt 10, Lenkerschellen 2 und Tragebügel 4. In Verlängerung des Aufnahmeabschnitts 10 bzw. deckend damit ist ein Sicherungsmittel 50 vorgesehen, das die Festlegung des Aufnahmeabschnitts 10 und somit auch der Lenkerschellen 2 am Vorbau 102 ermöglicht. Zur Fixierung ist wiederum ein Befestigungsmittel 56 in Form eines Schlingelements vorgesehen, wie dies zuvor bereits beschrieben wurde.

Wie in Fig. 40 dargestellt, ist der Tragebügel hier mehrteilig und/oder derart ausgebildet, dass er eine lösbare Anordnung des Kupplungselementes 6 erlaubt. Das Kupplungselement 6 kann hier über geeignete Befestigungs- und Arretierungsmittel 58 am Tragebügel fixiert werden.

### Bezugszeichenliste

- 2: Lenkerschelle
- 4: Tragebügel
- 6: Kupplungselement
- 8: Auskragender Abschnitt
- 10: Aufnahmeabschnitt
- 11: Scharnierung
- 12: Endabschnitt
- 14: Einführraum
- 16: Befestigungsmittel
- 17: Keilfläche
- 19: Gegenkeilfläche
- 22: Montagefortsatz
- 24: Arm
- 26: Endabschnitt des Arms
- 30: Fixiermittel
- 32: Montagefortsatzaufnahme
- 34: Rastmittel
- 36: Lagerkörper
- 38: Stirnseite
- 40: Lagerfläche
- 42: Montagefortsatzaufnahme
- 44: Aufnahmemittel
- 46: Gegenrastmittel
- 48: Adapterelement
- 50: Sicherungsmittel
- 51: Erstes Ende
- 52: Zweites Ende
- 53: Verbindungsbereich
- 54: Anlagefläche
- 56: Befestigungsmittel
- 58: Arretierungsmittel
- 59: Lagerplatte
- 60: Abdeckung
- 62: Aufnahme
- 100: Lenker
- 101: Aufnahmeraum
- 102: Lenkervorbau
- Ru: Überstülprichtung

## Patentansprüche

1. Befestigungssystem zum Befestigen von Behältern wie Taschen oder Körben an einem Lenker (100) eines Fahrrades, umfassend wenigstens eine Lenkerschelle (2), vorzugsweise wenigstens zwei Lenkerschellen (2), die in einer Überstülprichtung (RU) über den Lenker (100) überstülpbar sind und in übergestülpter Position den Lenker (100) wenigstens abschnittsweise umgreifen, und
einen Tragebügel (4), umfassend ein tragebügelseitiges Kupplungselement (6) zur Aufnahme des Behälters, das an einem auskragenden Abschnitt (8) des Tragebügels (4) angeordnet ist, wobei der Tragebügel (4) weiter einen Aufnahmeabschnitt (10) umfasst, der vorzugsweise entgegen der Überstülprichtung (RU) mit den Lenkerschellen (2) in Kopplungseingriff bringbar und so vorzugsweise ortsfest unter Festklemmen des Lenkers (100) am Lenker positionierbar ist,
weiter umfassend wenigstens ein Sicherungsmittel (50), das im wesentlichen biegesteif zwischen dem auskragenden Abschnitt (8) und einem vom Lenker (100) verschiedenen Bauteil des Fahrrades und vorzugsweise einem Lenkvorbau (102) kraftkoppelbar ist, so dass eine Rotation des auskragenden Abschnittes (8) relativ zum Lenker (100) verhindert wird, wobei die Lenkerschellen (2) vorzugsweise an freien Endabschnitten (12) Montagefortsätze (22) aufweisen und der Aufnahmeabschnitt (10) des Tragbügels (4) komplementäre Montagefortsatzaufsatzaufnahmen (32, 42) aufweist, in die die Montagefortsätze (22) vorzugsweise parallel zur Überstülprichtung (RU) einführbar sind, **dadurch gekennzeichnet, dass** die Montagefortsatzaufnahmen als optional anordbare Montagefortsatzaufnahmen (42) vorgesehen sind, die am Tragebügel (4) mittels Aufnahmemitteln (44) an wenigstens einer Alternativposition befestigbar sind und mit den Lenkerschellen (2) in Kopplungseingriff bringbar sind.

2. Befestigungssystem nach Anspruch 1, **dadurch gekennzeichnet, dass** das Sicherungsmittel (50) als Biegestab- und/oder Druckstabelement und insbesondere als ein im Wesentlichen biegesteifes Bügelelement ausgebildet ist.

3. Befestigungssystem nach einem der vorhergehenden Ansprüche, **dadurch gekennzeichnet, dass** das Sicherungsmittel gegen das vom Lenker (100) verschiedene Bauteil derart kraftkoppelbar ist, dass eine Rotation des auskragenden Abschnittes (8) relativ zum Lenker (100) wenigstens in einer Rotationsrichtung und vorzugsweise in zwei entgegengesetzte Rotationsrichtungen verhindert wird.

4. Befestigungssystem nach einem der vorhergehenden Ansprüche, **dadurch gekennzeichnet, dass** das Sicherungsmittel (50) wenigstens ein Arretierungsmittel aufweist, über dass es am Tragebügel (4) insbesondere festlegbar verschwenkbar angeordnet ist.

5. Befestigungssystem nach einem der vorhergehenden Ansprüche, **dadurch gekennzeichnet, dass** das Sicherungsmittel (50) wenigstens Abschnittsweise an unterschiedlichen Positionen am Tragebügel (4) und/oder in unterschiedlichen Ausrichtungen und/oder relativ zum Tragbügel anordbar und/oder festlegbar ist.

6. Befestigungssystem nach einem der vorhergehenden Ansprüche, **dadurch gekennzeichnet, dass** das Sicherungsmittel (50) über wenigstens ein Befestigungsmittel (56) an dem vom Lenker (100) verschiedenen Bauteil des Fahrrades und vorzugsweise dem Lenkvorbau (102) festlegbar ist.

7. Befestigungssystem nach einem der vorhergehenden Ansprüche, **dadurch gekennzeichnet, dass** die Lenkerschellen (2) als eigenständige Bauteile ausgebildet sind.

8. Befestigungssystem nach einem der vorhergehenden Ansprüche, **dadurch gekennzeichnet, dass** der Tragebügel (4) als U-förmiger oder dergleichen wenigstens zwei Arme (24) aufweisender Bügel ausgebildet ist, und wobei vorzugsweise die Arme (24) wenigstens teilweise den auskragenden Abschnitt (8) bilden und wobei vorzugsweise die Montagefortsatzaufnahmen (32, 42) in oder an den Armen (24) ausgebildet und/oder anordbar sind.

9. Befestigungssystem nach Anspruch 8, **dadurch gekennzeichnet, dass** das Kupplungselement (6) an den Armen (24), vorzugsweise an Endabschnitten (26) der Arme und vorzugsweise von den Montagefortsatzaufnahmen (32, 42) beabstandet angeordnet oder anordbar ist.

10. Befestigungssystem nach einem der Ansprüche 8 oder 9, wenn rückbezogen auf Anspruch 9, **dadurch gekennzeichnet, dass** das Kupplungselement (6) einen Lagerkörper (36) umfasst, der zwischen den beiden Armen (24) des Tragebügels (4) vorzugsweise einklemmbar fixierbar ausgebildet ist und vorzugsweise eine Festlegung des Kupplungselementes (6) in unterschiedlichen Positionen und/oder in unterschiedlichen Ausrichtungen erlaubt.

11. Befestigungssystem nach Anspruch 10, **dadurch gekennzeichnet, dass** der Lagerkörper (36) wenigstens zwei voneinander wegweisende Stirnseiten (38) aufweist, die komplementär und vorzugsweise parallel zu korrespondierenden Lagerflächen (40) an den Armen (24) des Tragebügels (4) ausgebildet sind, und wenigstens ein Fixiermittel (30), mittels dem die Stirnseiten (38) gegen die Lagerflächen (40) den Lagerkörper (36) fixierend pressbar sind.

12. Befestigungssystem nach einem der vorhergehenden Ansprüche, insbesondere Anspruch 11, **dadurch gekennzeichnet, dass** das Kupplungselement (6) und vorzugsweise die Stirnseiten (38) ein Rastmittel (34) aufweist, das mit einem Gegenrastmittel (46) an den Armen (24) des Tragebügels (4) und vorzugsweise an den Lagerflächen (40) in lösbarer Kraftkopplung steht oder bringbar ist und eine Festlegung des Kupplungselementes (6) in unterschiedlichen Positionen und/oder in unterschiedlichen Ausrichtungen erlaubt.

13. Befestigungssystem nach einem der vorhergehenden Ansprüche, **dadurch gekennzeichnet, dass** entlang des Tragebügels (4) der Aufnahmeabschnitt (10) und vorzugsweise die Montagefortsatzaufnahmen (32, 42) zwischen dem Sicherungsmittel (50) und dem auskragenden Abschnitt (8) angeordnet sind.

14. Befestigungssystem nach einem der vorhergehenden Ansprüche, wenn rückbezogen auf Anspruch 8, **dadurch gekennzeichnet, dass** das Sicherungsmittel (50) in einem Verbindungsbereich (52) der freien Arme (24) angeordnet ist.

15. Befestigungssystem nach einem der vorhergehenden Ansprüche, **dadurch gekennzeichnet, dass** der Tragebügel (4) derartig unterseitig an den Lenker (100) anpressbar ausgebildet ist, dass er mit wenigstens einem Teil des Sicherungsmittels (50) unterseitig gegen einen Lenkervorbau (102) des Fahrrades ansteht.

## Claims

1. Fixing system for fixing containers such as bags or baskets on a handlebar (100) of a bicycle, comprising
at least one handlebar band (2), preferably at least two handlebar bands (2), slidable over the handlebar (100) in a sliding-on direction (RU) and at least partially embracing the handlebar (100) in the slid-on position, and
a carrying bracket (4), comprising a carrying-bracket-side coupling element (6) for receiving the container, which is arranged on a cantilever section (8) of the carrying bracket (4), the carrying bracket (4) further comprising a receiving section (10), preferably configured to be brought into coupling engagement with the handlebar bands (2) against the sliding-on direction and thus be positioned on the handlebar by preferably fixedly clamping the handlebar (100),
further comprising at least one securing means (50) frictionally engageable in an essentially rigid manner between the cantilever section (8) and a component of the bicycle other than the handlebar (100), and preferably a handle stem (102), so that rotation of the cantilever section (8) relative to the handlebar (100) is prevented, wherein the handlebar bands (2) have mounting protrusions (22) preferably at free end sections (12) and the receiving section (10) of the carrying bracket (4) has complementary mounting protrusion receivers (32, 42) into which the mounting protrusions (22) are configured to be introduced preferably parallel to the sliding-on direction (RU), **characterized in that** the mounting protrusion receivers are provided as optionally arrangeable mounting protrusion receivers (42) fixable on the carrying bracket (4) by means of receiving means (44) at least at one alternative position and configured to be brought into coupling engagement with the handlebar bands (2).

2. Fixing system according to claim 1, **characterized in that** the securing means (50) is formed as a torsion bar and/or compression bar element and in particular as an essentially rigid bracket element.

3. Fixing system according to one of the preceding claims, **characterized in that** the securing means is force coupleable against the component other than the handlebar (100) in such a manner, that rotation of the cantilever section (8) relative to the handlebar (100) is prevented at least in one rotation direction and preferably in two opposite rotation directions.

4. Fixing system according to one of the preceding claims, **characterized in that** the securing means (50) includes at least one locking means via which it is arranged on the carrying bracket (4), in an in particular fixable rotatable manner.

5. Fixing system according to one of the preceding claims, **characterized in that** the securing means (50) is arrangeable and/or fixable at least partially at different positions on the carrying bracket (4) and/or in different orientations and/or relative to the carrying bracket (4).

6. Fixing system according to one of the preceding claims, **characterized in that** the securing means (50) is fixable via at least one fixing means (56) on the component of the bicycle other than the handlebar (100) and preferably on the handle stem (102).

7. Fixing system according to one of the preceding claims, **characterized in that** the handlebar bands (2) are formed as independent components.

8. Fixing system according to one of the preceding claims, **characterized in that** the carrying bracket (4) is formed as a U-shaped or similar bracket having at least two arms (24), and wherein preferably the arms (24) at least partially form the cantilever section (8), and wherein preferably the mounting protrusion receivers (32, 42) are formed and/or arrangeable in or on the arms (24).

9. Fixing system according to claim 8, **characterized in that** the coupling element (6) is arranged or arrangeable on the arms (24), preferably on end sections (26) of the arms and preferably spaced from the mounting protrusion receivers (32, 42).

10. Fixing system according to one of claims 8 or 9, when depending on claim 9, **characterized in that** the coupling element (6) comprises a support body (36) formed to be fixable between the two arms (24) of the carrying bracket (4) preferably in a clampable manner and preferably allows fixing of the coupling element (6) in different positions and/or in different orientations.

11. Fixing system according to claim 10, **characterized in that** the support body (36) comprises at least two end faces (38) facing away from each other, which are formed to be complementary and preferably parallel to corresponding support surfaces (40) on the arms (24) of the carrying bracket (4), and at least one fixing means (30), by means of which the end faces (38) are pressable against the support surfaces (40) thus fixing the support body (36).

12. Fixing system according to one of the preceding claims, in particular claim 11, **characterized in that** the coupling element (6) and preferably the end faces (38) comprise a locking means (34) which is in, or can be brought into, releasable frictional engagement with a counter locking means (46) on the arms (24) of the carrying bracket (4) and preferably on the support surfaces (40) and allows fixing of the coupling element (6) in different positions and/or in different orientations.

13. Fixing system according to one of the preceding claims, **characterized in that** the receiving section (10) and preferably the mounting protrusion receivers (32, 42) are arranged along the carrying bracket (4) between the securing means (50) and the cantilever section (8).

14. Fixing system according to one of the preceding claims, when dependent on claim 8, **characterized in that** the securing means (50) is arranged in a connection area (52) of the free arms (24).

15. Fixing system according to one of the preceding claims, **characterized in that** the carrying bracket (4) is formed to be pressable against the underside of the handlebar (100) in such a manner that it abuts with at least a portion of the securing means (50) against the underside of the handle stem (102) of the bicycle.

## Revendications

1. Système de fixation destiné à la fixation de récipients tels que des sacs ou des corbeilles sur un guidon (100) d'un vélo, comprenant
au moins une bride de guidon (2), de préférence au moins deux brides de guidon (2), qui peuvent être enfichées dans une direction d'enfichage (RU) sur le guidon (100) et qui, dans la position enfichée, entourent au moins par tronçons le guidon (100), et
un étrier de support (4), comprenant un élément d'accouplement (6) côté étrier de support, pour la réception du récipient, qui est disposé sur un tronçon (8) en saillie de l'étrier de support (4), l'étrier de support (4) comprenant également un tronçon de réception (10) qui peut être amené en engrènement d'accouplement, de préférence à l'opposé de la direction d'enfichage, (RU) avec les brides de guidon (2) et peut être positionné ainsi sur le guidon de préférence de façon fixe avec serrage à bloc du guidon (100),
comprenant également au moins un moyen de blocage (50) qui peut être accouplé en force essentiellement de façon rigide en flexion entre le tronçon (8) en saillie et un composant du vélo différent du guidon (100), et de préférence une potence de guidon (102), de telle sorte qu'une rotation du tronçon (8) en saillie relativement au guidon (100) est empêchée, les brides de guidon (2) comportant de préférence sur des tronçons d'extrémité (12) libres des prolongements de montage (22), et le tronçon de réception (10) de l'étrier de support (4) comportant des logements pour prolongements de montage (32, 42) complémentaires dans lesquels les prolongements de montage (22) peuvent être introduits de préférence parallèlement à la direction d'enfichage (RU),
**caractérisé en ce que**
les logements pour prolongements de montage sont prévus en tant que logements pour prolongements de montage (42) pouvant être disposés optionnellement, qui peuvent être fixés sur l'étrier de support (4) au moyen de moyens de réception (44) dans au moins une position de substitution et qui peuvent être amenés en engrènement d'accouplement avec les brides de guidon (2).

2. Système de fixation selon la revendication 1, **caractérisé en ce que** le moyen de blocage (50) est constitué en tant qu'élément à barreau de flexion et/ou barreau de pression et en particulier en tant qu'élément d'étrier essentiellement rigide en flexion.

3. Système de fixation selon l'une des revendications précédentes, **caractérisé en ce que** le moyen de blocage peut être accouplé en force contre le composant différent du guidon (100) de telle sorte qu'une rotation du tronçon (8) en saillie relativement au guidon (100) est empêchée au moins dans un sens de rotation et de préférence dans deux sens de rotation opposés.

4. Système de fixation selon l'une des revendications précédentes, **caractérisé en ce que** le moyen de blocage (50) comporte au moins un moyen de verrouillage par le biais duquel il est disposé de façon pivotante sur l'étrier de support (4), en particulier de façon immobilisable.

5. Système de fixation selon l'une des revendications précédentes, **caractérisé en ce que** le moyen de blocage (50) peut être disposé et/ou immobilisé au moins par tronçons dans différentes positions sur l'étrier de support (4) et/ou dans différentes orientations et/ou relativement à l'étrier de support.

6. Système de fixation selon l'une des revendications précédentes, **caractérisé en ce que** le moyen de blocage (50) peut être immobilisé, par le biais d'au moins un moyen de fixation (56), sur le composant du vélo différent du guidon (100) et de préférence la potence de guidon (102).

7. Système de fixation selon l'une des revendications précédentes, **caractérisé en ce que** les brides de guidon (2) sont constituées en tant que composants autonomes.

8. Système de fixation selon l'une des revendications précédentes, **caractérisé en ce que** l'étrier de support (4) est constitué en tant qu'étrier en forme de U ou similaire comportant au moins deux bras (24), et de préférence les bras (24) formant au moins partiellement le tronçon (8) en saillie, et de préférence les logements pour prolongements de montage (32, 42) étant constitués et/ou pouvant être disposés dans ou sur les bras (24).

9. Système de fixation selon la revendication 8, **caractérisé en ce que** l'élément d'accouplement (6) est disposé ou peut être disposé sur le bras (24), de préférence sur des tronçons d'extrémité (26) des bras et de préférence à distance des logements pour prolongements de montage (32, 42).

10. Système de fixation selon l'une des revendications 8 ou 9, si elle est dépendante de la revendication 9, **caractérisé en ce que** l'élément d'accouplement (6) comprend un corps de palier (36) qui est constitué de façon blocable, de préférence coinçable, entre les deux bras (24) de l'étrier de support (4) et permet de préférence une immobilisation de l'élément d'accouplement (6) dans différentes positions et/ou dans différentes orientations.

11. Système de fixation selon la revendication 10, **caractérisé en ce que** le corps de palier (36) comporte au moins deux côtés frontaux (38) dirigés dans des directions opposées qui sont constitués de façon complémentaire et de préférence parallèlement à des surfaces de palier (40) correspondantes sur les bras (24) de l'étrier de support (4), et au moins un moyen de fixation (30) au moyen duquel les côtés frontaux (38) peuvent être pressés contre les surfaces de palier (40) en bloquant le corps de palier (36).

12. Système de fixation selon l'une des revendications précédentes, en particulier la revendication 11, **caractérisé en ce que** l'élément d'accouplement (6) et de préférence les côtés frontaux (38) comportent un moyen d'encliquetage (34) qui est ou peut être mis en accouplement en force détachable avec un moyen de contre-encliquetage (46) sur les bras (24) de l'étrier de support (4) et de préférence sur les surfaces de palier (40) et permet une immobilisation de l'élément d'accouplement (6) dans différentes positions et/ou dans différentes orientations.

13. Système de fixation selon l'une des revendications précédentes, **caractérisé en ce que**, le long de l'étrier de support (4), le tronçon de réception (10) et de préférence les logements pour prolongements de montage (32, 42) sont disposés entre le moyen de blocage (50) et le tronçon (8) en saillie.

14. Procédé selon l'une des revendications précédentes, si elle est dépendante de la revendication 8, **caractérisé en ce que** le moyen de blocage (50) est disposé dans une zone de raccordement (52) des bras (24) libres.

15. Système de fixation selon l'une des revendications précédentes, **caractérisé en ce que** l'étrier de support (4) est constitué de façon à pouvoir être pressé dans sa partie inférieure sur le guidon (100) de telle sorte qu'il vient en contact par au moins une partie du moyen de blocage (50) dans la partie inférieure contre une potence de guidon (102) du vélo.
